# EUROPÄISCHE PATENTSCHRIFT

(11) **EP 1 752 927 B1**
(45) Veröffentlichungstag und Bekanntmachung des Hinweises auf die Patenterteilung: **25.06.2008**
(21) Anmeldenummer: 06023978.7
(22) Anmeldetag: 15.10.2004
(51) Int. Cl.: G07C 9/00, G07B 15/02

(54) **Berechtigungskontrollverfahren sowie dafür geeignete Vorrichtungen**
Authorisation control procedure and corresponding device
Procédé et dispositif pour effectuer un controle d'autorisation

(30) Priorität: 17.10.2003 EP 03405752
(43) Veröffentlichungstag der Anmeldung: 14.02.2007
(62) Teilanmeldung aus: 04761965.5
(73) Patentinhaber: Swisscom (Schweiz) AG, 3050 Bern (CH)
(72) Erfinder: Lagadec, Roger, 8105 Regensdorf (CH); Messmer, Bruno, 3600 Thun (CH); Cantini, Renato, 1782 Belfaux (CH)
(74) Vertreter: Rentsch & Partner

(56) Entgegenhaltungen:
- EP-A- 1 345 180
- WO-A-02/48926
- US-A1- 2003 054 801

## Beschreibung

### Technisches Gebiet

Die vorliegende Erfindung betrifft ein Berechtigungskontrollverfahren sowie dafür geeignete Vorrichtungen. Die Erfindung betrifft insbesondere ein Berechtigungskontrollverfahren, in welchem Berechtigungsdaten über eine Benutzerschnittstelle einer elektronischen Wiedergabevorrichtung wiedergegeben werden sowie ein System zur Berechtigungskontrolle, das eine elektronische Wiedergabevorrichtung mit einer Benutzerschnittstelle zur Wiedergabe der Berechtigungsdaten umfasst, und ein Computerprogrammprodukt mit Computerprogrammcodemitteln zur Steuerung eines oder mehrerer Prozessoren der Wiedergabevorrichtung.

### Stand der Technik

Die Verwendung von elektronischen Wiedergabevorrichtungen für Wiedergabe von Berechtigungsdaten über eine Benutzerschnittstelle in Form einer Anzeige hat den Vorteil, dass keine einmaligen Papiertickets hergestellt und verteilt werden müssen. Elektronische Wiedergabevorrichtungen für die Wiedergabe von Berechtigungsdaten haben den Vorteil, dass sie mehrfach und zum Bezug von verschiedenen Dienstleistungen oder zum Zugang zu verschiedenen Systemen oder Gebäuden verwendbar sind. Zudem können elektronische Wiedergabevorrichtungen mit Kommunikationsmodulen versehen werden, so dass Berechtigungsdaten dynamisch über ein Telekommunikationsnetz in die Wiedergabevorrichtungen geladen werden können.

In der Patentanmeldung DE 100 34 275 wird ein Berechtigungskontrollverfahren beschrieben, in welchem Zugangsberechtigungen über ein Mobilfunknetz an eine mobile Vorrichtung übertragen werden und dort für einen Barcodeleser (maschinen-)lesbar auf der Anzeige dargestellt werden.

In der Patentanmeldung US 2003/0054801 wird ein Berechtigungskontrollverfahren beschrieben, in welchem Zugangsberechtigungen über ein Mobilfunknetz an eine mobile Vorrichtung übertragen werden, wo sie durch eine benutzerunabhängige Funktion in grafischer Form auf einer Anzeige dargestellt werden und von einem Kontrolleur mit seinen Augen betrachtet werden können. Zudem kann der Kontrolleur zur Überprüfung der Echtheit der grafisch dargestellten Berechtigungsdaten nach US 2003/0054801 mittels eines Kommunikationsendgeräts eine Rückfrage an eine Berechtigungszentrale übermitteln. Dabei wird die Übermittlung der Berechtigungsdaten, die dem betreffenden Benutzer respektive der betreffenden mobilen Vorrichtung zugeordnet sind, von der Berechtigungszentrale an das Kommunikationsendgerät des Kontrolleurs angefordert. Um unberechtigte Kopien der grafisch dargestellten Berechtigungsdaten zu vermeiden, sind nach US 2003/0054801 allerdings auch zusätzliche maschinenlesbare visuelle Merkmale nötig.

In WO 02/48926 wird ein Berechtigungskontrollverfahren beschrieben, in welchem bei der Berechtigungskontrolle benutzerspezifische Transaktionsparameter von einer Zentrale angefordert werden. Die Transaktionsparameter oder ein davon abhängiger Statuscode wird von der Zentrale an das Endgerät eines Kontrolleurs übermittelt. Gemäss WO 02/48926 wird der Statuscode an ein Endgerät des Benutzers übermittelt und für den Kontrolleur sichtbar angezeigt, wobei zur Erhöhung der Sicherheit der Status Code von der Zentrale regelmässig erneuert wird. Im Endgerät des Kontrolleurs wird der Status Code nach einem gleichen Algorithmus generiert, so dass beide Codes ständig und synchronisiert wechseln jedoch den gleichen Wert aufweisen.

### Darstellung der Erfindung

Es ist eine Aufgabe der vorliegenden Erfindung, ein neues Berechtigungskontrollverfahren sowie dafür geeignete Vorrichtungen vorzuschlagen, welche nicht die Nachteile des Stands der Technik aufweisen. Insbesondere sollen ein neues Berechtigungskontrollverfahren sowie dafür geeignete Vorrichtungen vorgeschlagen werden, welche ermöglichen, dass Berechtigungsdaten über eine Benutzerschnittstelle einer elektronischen Wiedergabevorrichtung wiedergegeben werden können, ohne dass zur Überprüfung der Echtheit der wiedergegebenen Berechtigungsdaten Rückfragen an eine Berechtigungszentrale notwendig sind, und ohne dass die Berechtigungsdaten zur Vermeidung von unberechtigten Kopien in maschinenlesbarer Form wiedergegeben werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die Berechtigungsdaten werden über eine Benutzerschnittstelle einer ersten elektronischen Wiedergabevorrichtung wiedergegeben.

Die oben genannten Ziele werden durch die vorliegende Erfindung insbesondere dadurch erreicht, dass während der Wiedergabe der Berechtigungsdaten über die Benutzerschnittstelle der ersten Wiedergabevorrichtung Wiedergabeattribute verändert werden. Die Wiedergabeattribute umfassen insbesondere über die menschlichen Sinnesorgane wahrnehmbare Attribute, zum Beispiel visuelle Attribute von darstellbaren Objekten, wie Farbe, Orientierung, Bestimmung eines Bildausschnitts, Position oder Schrifttyp, oder Audioattribute von akustisch wiedergebbaren Objekten, wie Lautstärke, Tonhöhe oder Tonlänge. Die Wiedergabe der Berechtigungsdaten über die Benutzerschnittstelle der ersten Wiedergabevorrichtung wird mit der Wiedergabe von Referenzdaten über eine Benutzerschnittstelle einer zweiten elektronischen Wiedergabevorrichtung verglichen. Die Berechtigung wird gewährt, wenn eine Übereinstimmung zwischen der Wiedergabe der Berechtigungsdaten über die Benutzerschnittstelle der ersten Wiedergabevorrichtung und der Wiedergabe der Referenzdaten über die Benutzerschnittstelle der zweiten Wiedergabevorrichtung besteht und Veränderungen der Wiedergabeattribute im Wesentlichen zeitsynchronisiert sind. Für die Übereinstimmung zwischen der Wiedergabe der Berechtigungsdaten und der Wiedergabe der Referenzdaten wird mindestens eine Übereinstimmung in den Wiedergabeattributen vorausgesetzt. Die Wiedergabe der Berechtigungsdaten durch die erste Wiedergabevorrichtung und die Wiedergabe der Referenzdaten durch die zweite Wiedergabevorrichtung wird beispielsweise von einem Kontrolleur über seine Sinne wahrgenommen und der Kontrolleur kann die Berechtigung je nach Anwendung gewähren, wenn durch beide Wiedergabevorrichtungen inhaltlich nicht übereinstimmende Daten mit übereinstimmenden Wiedergabeattributen und mit zeitsynchronisierten Änderungen der übereinstimmenden Wiedergabeattribute wiedergegeben werden, oder wenn durch beide Wiedergabevorrichtungen übereinstimmende Inhalte zeitgleich und mit synchronisierten Veränderungen wiedergegeben werden. Das heisst, eine Berechtigung ist beispielsweise gewährbar, wenn durch die beiden Wiedergabevorrichtungen zeitgleich übereinstimmende visuelle Inhalte mit den gleichen visuellen Attributen auf ihren Anzeigen dargestellt und/oder zeitgleich übereinstimmende hörbare Inhalte mit den gleichen Audioattributen über ihre elektroakustischen Wandler wiedergegeben werden. Die Berechtigungsdaten und die Referenzdaten umfassen beispielsweise Dienstbezeichnungen in Schriftform, wobei die Berechtigung für den betreffenden Dienst nur gewährbar ist, wenn die Dienstbezeichnung durch die beiden Wiedergabevorrichtungen zum gleichen Zeitpunkt mit der gleichen Schriftart wiedergegeben wird. Betrifft die Dienstleistung beispielsweise eine Fahrt mit der Eisenbahn, so genügt typischerweise eine Übereinstimmung der sich zeitsynchronisiert ändemden Wiedergabeattribute der Dienstbezeichnung. Auf der ersten Wiedergabevorrichtung eines Passagiers umfasst die Dienstbezeichnung beispielsweise die genaue Strecke, die Klasse und das Datum, wohingegen die Dienstbezeichnung auf der Wiedergabevorrichtung des Kontrolleurs beispielsweise bloss eine Zug- oder Streckennummer umfasst. Die Berechtigungsdaten umfassen beispielsweise Benutzeridentifizierungsdaten, die nur als authentisch akzeptiert werden, wenn sie mit Wiedergabeattributen wiedergegeben werden, die mit dafür vorgesehenen Wiedergabeattributen übereinstimmen, die zum betreffenden Zeitpunkt mit den Referenzdaten wiedergegeben werden. Zum Beispiel ist eine Fotografie des Benutzers als Benutzeridentifizierung gewährbar, wenn sie in der Anzeige an der Position angezeigt wird, die mit der Position übereinstimmt, die gleichzeitig dafür in der Anzeige mit den wiedergegebenen Referenzdaten angezeigt wird. Auch im letzteren Beispiel genügt eine Übereinstimmung der sich zeitsynchronisiert ändernden Wiedergabeattribute, nämlich die Position, wo die Benutzeridentifizierungsdaten in der Anzeige dargestellt werden, und es ist keine inhaltliche Übereinstimmung erforderlich, weil im System beispielsweise keine Benutzeridentifizierungsdaten zur Anzeige auf der Wiedergabevorrichtung des Kontrolleurs verfügbar oder zugänglich sind. Da sich die Wiedergabe der Berechtigungsdaten durch die dynamische Änderung der Wiedergabeattribute dauernd ändert, kann die unberechtigte Kopie von Bildinhalten oder Toninhalten zur Fälschung einer Berechtigung praktisch ausgeschlossen werden. Zudem erübrigen sich Rückfragen an eine Berechtigungszentrale, da die Berechtigungsdaten und die Referenzdaten zur gleichen Zeit durch die beiden Wiedergabevorrichtungen wiedergegeben werden. Wenn die Berechtigungsdaten Dienstleistungen, Systeme oder Gebäude betreffen, die gleichzeitig von mehreren Benutzern benutzt werden, kann die Wiedergabe der Berechtigungsdaten über die Benutzerschnittstellen der elektronischen Wiedergabevorrichtungen der Benutzer ebenfalls synchronisiert erfolgen, so dass ein Kontrolleur über keine eigene zweite elektronische Wiedergabevorrichtung verfügen muss, sondern die Wiedergabe der Berechtigungsdaten über die Benutzerschnittstellen der elektronischen Wiedergabevorrichtungen der Benutzer untereinander vergleichen kann. Beispielsweise kann so die Berechtigung von Zugspassagieren überprüft werden, indem der Kontrolleur kontrolliert, ob die Wiedergabevorrichtungen der Passagiere untereinander übereinstimmende Inhalte zeitgleich und mit synchronisierten Veränderungen wiedergegeben.

Vorzugsweise werden die Berechtigungsdaten in einem Datenspeicher der ersten Wiedergabevorrichtung gespeichert, die Referenzdaten werden in einem Datenspeicher der zweiten Wiedergabevorrichtung gespeichert, die Wiedergabe der Berechtigungsdaten über die Benutzerschnittstelle der ersten Wiedergabevorrichtung basiert auf einem ersten Synchronisierungssignal und die Wiedergabe der Referenzdaten über die Benutzerschnittstelle der zweiten Wiedergabevorrichtung basiert auf einem zweiten Synchronisierungssignal. Durch die Speicherung der Berechtigungsdaten und der Referenzdaten in den Wiedergabevorrichtungen können Berechtigungen individuell auf Wiedergabevorrichtungen der Benutzer übertragen werden, ohne dass eine Zuordnung von Berechtigungsdaten zu Benutzern in einer Berechtigungszentrale gespeichert und verwaltet werden muss. Die Speicherung der Berechtigungsdaten in einer Wiedergabevorrichtung ermöglicht auch die Realisierung von Berechtigungs-oder Zutrittstickets, die mehrfach und/oder über längere Zeiträume gültig sind.

In einer Ausführungsvariante wird das erste Synchronisierungssignal in der ersten Wiedergabevorrichtung erzeugt und das zweite Synchronisierungssignal wird in der zweiten Wiedergabevorrichtung erzeugt. Diese Ausführungsvariante ermöglicht eine maximale Unabhängigkeit der Wiedergabevorrichtungen. Die Synchronisierung der Wiedergabe der Berechtigungsdaten und der Wiedergabe der Referenzdaten erfolgt auf der Basis von Signalisierungssignalen, die unabhängig voneinander in den Wiedergabevorrichtungen erzeugt werden.

In einer Ausführungsvariante wird das erste Synchronisierungssignal in der ersten Wiedergabevorrichtung auf Grund eines Signals erzeugt, das in der ersten Wiedergabevorrichtung von der zweiten Wiedergabevorrichtung empfangen wurde, oder das zweite Synchronisierungssignal wird umgekehrt in der zweiten Wiedergabevorrichtung auf Grund eines Signals erzeugt, das in der zweiten Wiedergabevorrichtung von der ersten Wiedergabevorrichtung empfangen wurde. Diese Ausführungsvariante bedingt eine engere Kopplung der Wiedergabevorrichtungen, vorzugsweise über eine Geräteschnittstelle. Andererseits kann eine genauere Synchronisierung zwischen den Wiedergabevorrichtungen erreicht werden, da die Synchronisierung der Wiedergabe der Berechtigungsdaten und der Wiedergabe der Referenzdaten auf der Basis eines Synchronisierungssignals basiert, das in einer der Wiedergabevorrichtungen erzeugt wird.

In einer Ausführungsvariante werden das erste Synchronisierungssignal und das zweite Synchronisierungssignal in der ersten Wiedergabevorrichtung respektive in der zweiten Wiedergabevorrichtung auf Grund eines von einer computerbasierten Berechtigungszentrale empfangenen Signals erzeugt. Diese Ausführungsvariante hat den Vorteil, dass die Wiedergabevorrichtungen weder Zeitbestimmungsmittel zur Erzeugung der Synchronisierungssignale noch Geräteschnittstellen zur Synchronisierung der Synchronisierungssignale aufweisen müssen. Zusammen mit dem Signal zur Synchronisierung der Synchronisierungssignale können von der Berechtigungszentrale zudem Wiedergabeattribute und/oder Angaben zur Änderung der Wiedergabeattribute an die Wiedergabevorrichtungen übermittelt werden.

In einer Ausführungsvariante werden die Berechtigungsdaten in einem Datenspeicher einer computerbasierten Berechtigungszentrale gespeichert, und die Berechtigungsdaten und die Referenzdaten werden von der Berechtigungszentrale im Wesentlichen zeitsynchron über ein Telekommunikationsnetz an die erste Wiedergabevorrichtung respektive an die zweite Wiedergabevorrichtung übermittelt. Diese Ausführungsvariante ermöglicht, Berechtigungsdaten im so genannten Push-Modus dynamisch an die Wiedergabevorrichtungen zu übermitteln, wodurch das unberechtigte Kopieren von Berechtigungsdaten weiter erschwert wird.

Vorzugsweise erfolgt die Veränderung von Wiedergabeattributen in der Wiedergabe der Berechtigungsdaten und in der Wiedergabe der Referenzdaten auf Grund entsprechender Daten in den Berechtigungsdaten respektive in den Referenzdaten. Das heisst die Wiedergabeattribute werden während der Wiedergabe der Berechtigungsdaten und der Referenzdaten auf Grund von Regeldaten, Instruktionsdaten, Algorithmen und/oder Attributänderungsparametern geändert, die in den Berechtigungsdaten respektive Referenzdaten enthalten sind. Dadurch wird eine dynamische Änderung der Wiedergabeattribute unabhängig von einer Berechtigungszentrale ermöglicht.

In einer Ausführungsvariante erfolgt die Veränderung von Wiedergabeattributen in der Wiedergabe der Berechtigungsdaten und in der Wiedergabe der Referenzdaten auf Grund entsprechender Daten, die von einer Berechtigungszentrale über ein Telekommunikationsnetz an die erste Wiedergabevorrichtung respektive an die zweite Wiedergabevorrichtung übermittelt werden. Durch die dynamische Übermittlung von Angaben zur.Veränderung der Wiedergabeattribute von der Berechtigungszentrale an die Wiedergabevorrichtungen wird die Vorhersehbarkeit der Veränderungen der Wiedergabeattribute ausgeschlossen.

Erfindungsgemäss werden die Berechtigungsdaten von einer Berechtigungszentrale über ein Telekommunikationsnetz an die erste Wiedergabevorrichtung übermittelt und die Veränderung von Wiedergabeattributen in der Wiedergabe der Berechtigungsdaten erfolgt auf Grund von Wiedergabesteuerdaten, die von einer Wiedergabesteuerzentrale über das Telekommunikationsnetz an die erste Wiedergabevorrichtung übermittelt werden. Die Referenzdaten werden von der Wiedergabesteuerzentrale über das Telekommunikationsnetz an die zweite Wiedergabevorrichtung übermittelt und die Veränderung von Wiedergabeattributen in der Wiedergabe der Referenzdaten erfolgt auf Grund von Daten, die von der Wiedergabesteuerzentrale über das Telekommunikationsnetz an die zweite Wiedergabevorrichtung übermittelt werden. Die Verwendung getrennter Quellen und Übertragungswege einerseits für die zu verifizierenden Informationen, insbesondere für die Berechtigungsdaten, und andrerseits für die Wiedergabesteuerdaten ermöglicht verschiedene Betreiber respektive Dienstanbieter zu definieren, die verantwortlich für die Bereitstellung der zu verifizierenden Informationen (Berechtigungsdaten) oder für die Steuerung der Wiedergabe der zu verifizierenden Informationen sind. Das heisst es können ein System und ein Verfahren zur Verifizierung von Informationen, insbesondere ein Berechtigungskontrollverfahren und ein System für die Berechtigungskontrolle, realisiert werden, in welchen der Dienstanbieter, der die Wiedergabe der zu verifizierenden Informationen auf den Wiedergabevorrichtungen steuert, keinen Einblick in die zu verifizierenden Informationen hat, und in welchen der Dienstanbieter, der die zu verifizierenden Informationen (Berechtigungsdaten) liefert, keinen Einblick in die Steuerung der Wiedergabe der zu verifizierenden Informationen hat.

Die erste Wiedergabevorrichtung ist in einer Ausführungsvariante als mobiles Kommunikationsendgerät ausgeführt. Mobile Kommunikationsendgeräte sind insbesondere geeignet, Berechtigungsdaten, Angaben zur Veränderung der Wiedergabeattribute und/oder Synchronisierungssignale dynamisch von einer Berechtigungszentrale über ein Mobilfunknetz zu empfangen. Die erste Wiedergabevorrichtung kann auch als Chipkarte ausgeführt sein, welche beispielsweise mit einer Anzeige versehen ist.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch Wiedergabevorrichtungen darstellt, die mit Benutzerschnittstellen versehen sind und zur Erzeugung eines Synchronisierungssignals eingerichtet sind.
Figur 2 zeigt ein Blockdiagramm, welches schematisch Wiedergabevorrichtungen darstellt, die mit Benutzerschnittstellen versehen sind und mit einer Berechtigungszentrale verbunden sind, welche zur Erzeugung eines Synchronisierungssignals eingerichtet ist.
Figur 3 zeigt ein Blockdiagramm, welches schematisch Wiedergabevorrichtungen darstellt, die mit Benutzerschnittstellen versehen sind, wobei eine der Wiedergabevorrichtungen eingerichtet ist, ein Synchronisierungssignal zu erzeugen und an die andere Wiedergabevorrichtung zu übertragen.
Figur 4 zeigt ein Blockdiagramm, welches schematisch Wiedergabevorrichtungen darstellt, die mit Benutzerschnittstellen versehen sind und mit einer Berechtigungszentrale verbunden sind, welche zur synchronisierten Übermittlung von Berechtigungsdaten an die Wiedergabevorrichtungen eingerichtet ist.
Figur 5a zeigt eine Zeitachse, entlang welcher über die Benutzerschnittstelle einer Wiedergabevorrichtung wiedergegebene Referenzdaten zu verschiedenen Zeitpunkten dargestellt werden.
Figur 5b zeigt eine Zeitachse, entlang welcher über die Benutzerschnittstelle einer Wiedergabevorrichtung wiedergegebene Berechtigungsdaten zu verschiedenen Zeitpunkten dargestellt werden.
Figur 6 zeigt ein Bild mit mehreren Bildsegmenten sowie ein Datenbeleg mit einer Bildobjektidentifizierung und einer Sequenz von Bildsegmentidentifizierungen.
Figur 7 zeigt ein Blockdiagramm, welches schematisch Wiedergabevorrichtungen darstellt, die mit Benutzerschnittstellen versehen sind und die sowohl mit einer Berechtigungszentrale als auch mit einer Wiedergabesteuerzentrale verbunden sind.

### Wege zur Ausführung der Erfindung

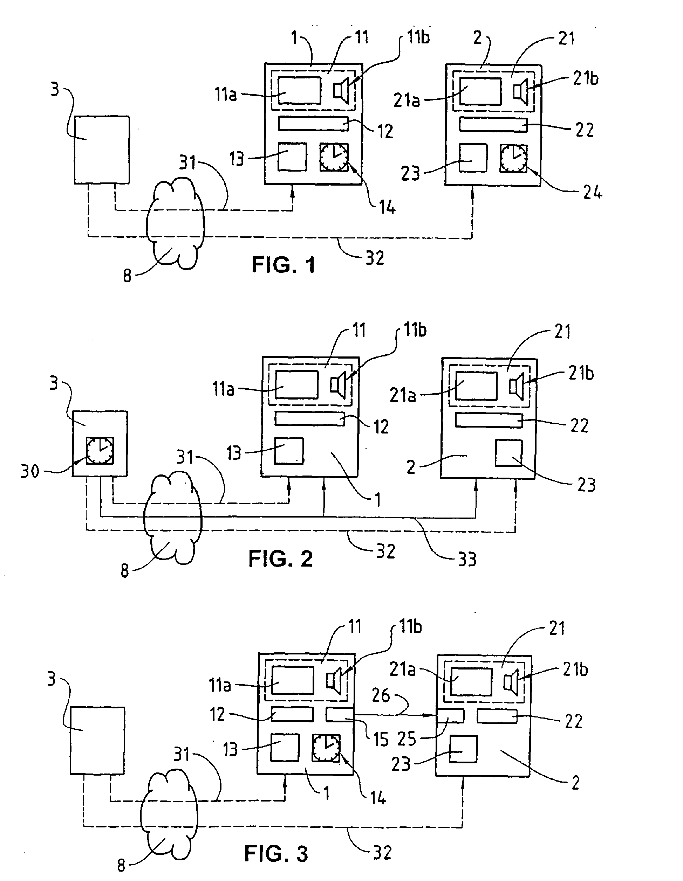

In den Figuren 1, 2, 3, 4 und 7 bezieht sich das Bezugszeichen 3 auf eine computerbasierte Berechtigungszentrale, die einen oder mehrere Computer umfasst und über das Telekommunikationsnetz 8 mit den Wiedergabevorrichtungen 1, 2 verbindbar ist.

Das Telekommunikationsnetz 8 umfasst vorzugsweise ein Mobilfunknetz, beispielsweise ein GSM- (Global System for Mobile Communication), ein UMTS-Netz (Universal Mobile Telephone System) oder ein WLAN (Wireless Local Area Network). Das Telekommunikationsnetz 8 kann auch ein Festnetz umfassen, beispielsweise das Internet.

Die Wiedergabevorrichtungen 1, 2 sind vorzugsweise als mobile Kommunikationsendgeräte ausgeführt, beispielsweise Mobilfunktelefone, PDA- (Personal Data Assistant) oder Laptop-Computer. Die Wiedergabevorrichtungen 1, 2 können auch als feste Kommunikationsendgeräte oder als Chipkarten ausgeführt werden, wobei letztere zur Verbindung mit der Berechtigungszentrale 3 mit einem Kommunikationsendgerät, beispielsweise mit einem mobilen Kommunikationsendgerät, verbunden werden.

Wie in den Figuren 1, 2 und 3 dargestellt ist, umfasst die Wiedergabevorrichtung 1 einen Datenspeicher 13 zur Speicherung von Berechtigungsdaten und die Wiedergabevorrichtung 2 umfasst einen Datenspeicher 23 zur Speicherung von Referenzdaten. Wie in den Figuren 1, 2 und 3 mittels des gestrichelten Pfeils 31 schematisch dargestellt ist, werden die Berechtigungsdaten von der Berechtigungszentrale 3 über das Telekommunikationsnetz 8 an die Wiedergabevorrichtung 1 übermittelt und dort im Datenspeicher 13 gespeichert. In entsprechender Weise werden die Referenzdaten, wie in den Figuren 1, 2 und 3 mittels des gestrichelten Pfeils 32 schematisch dargestellt ist, von der Berechtigungszentrale 3 über das Telekommunikationsnetz 8 an die Wiedergabevorrichtung 2 übermittelt und dort im Datenspeicher 23 gespeichert. Die Berechtigungsdaten und die Referenzdaten können auch ohne Verwendung des Telekommunikationsnetzes 8 durch direkte Programmierung in den Datenspeichern 13 respektive 23 gespeichert werden, beispielsweise bei einer Verkaufsstelle oder bei einem Hersteller von mobilen Datenträgern.

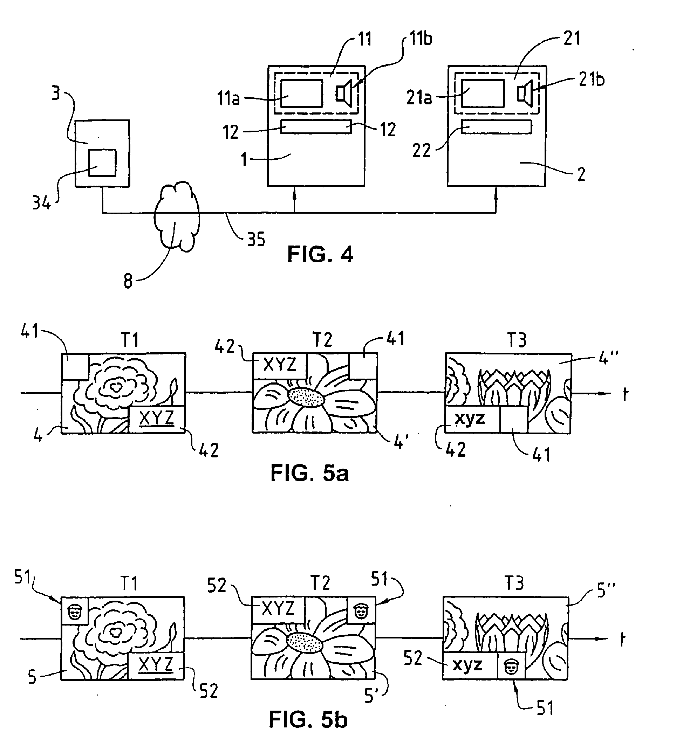

In der Figur 4 ist eine alternative Ausführungsvariante dargestellt, in der die Berechtigungsdaten respektive die Referenzdaten, wie mittels des gestrichelten Pfeils 35 schematisch dargestellt, von der Berechtigungszentrale 3 synchronisiert im Push-Modus über das Telekommunikationsnetz 8 zur Wiedergabe an die Wiedergabevorrichtungen 1 respektive 2 übermittelt werden.

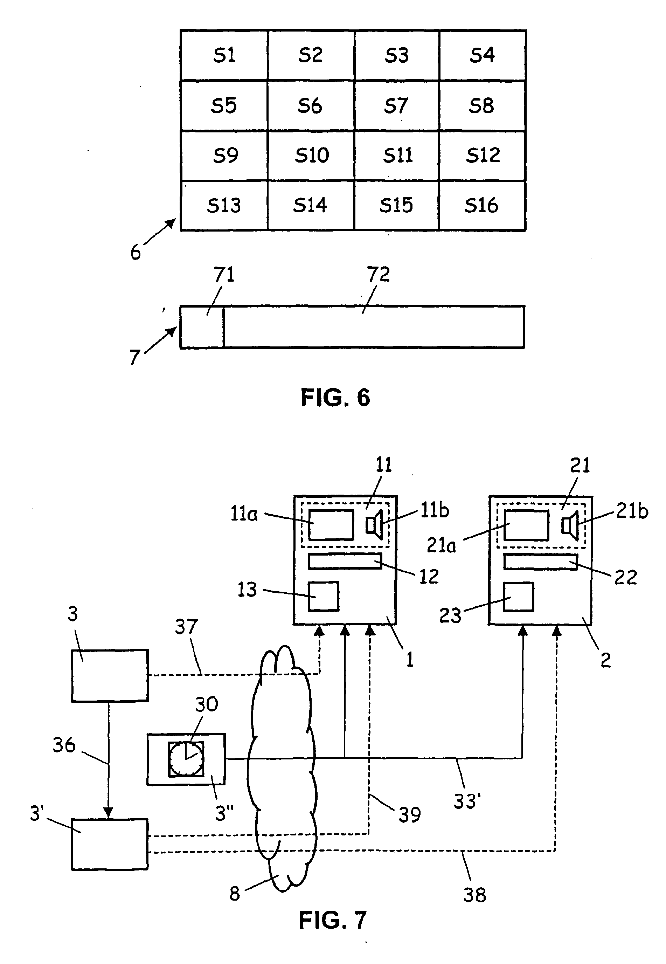

In der Figur 7 ist eine weitere alternative Ausführungsvariante dargestellt, die im Folgenden als Dienstleistertrennungsvariante bezeichnet wird. In der Figur 7 bezieht sich das Bezugszeichen 3' auf eine computerbasierte Wiedergabesteuerzentrale und das Bezugszeichen 3" bezieht sich auf eine computerbasierte Synchronisierungszentrale, die jeweils einen oder mehrere Computer umfassen und über das Telekommunikationsnetz 8 mit den Wiedergabevorrichtungen 1, 2 verbindbar sind. In der Dienstleistertrennungsvariante werden die Bereitstellung von Berechtigungsdaten (zu verifizierende Informationen) und die Bereitstellung von Referenzdaten sowie optional auch die Erzeugung eines Synchronisierungssignals durch separate Dienstanbieter respektive separate computerbasierte Einheiten durchgeführt. Wie in der Figur 7 mittels des gestrichelten Pfeils 37 schematisch dargestellt ist, werden die Berechtigungsdaten von der Berechtigungszentrale 3 zusammen mit einer Verifizierungsidentifizierung über das Telekommunikationsnetz 8 an die Wiedergabevorrichtung 1 übermittelt und dort im Datenspeicher 13 gespeichert. Die Referenzdaten hingegen werden, wie mittels des gestrichelten Pfeils 38 schematisch dargestellt ist, von der Wiedergabesteuerzentrale 3' über das Telekommunikationsnetz 8 an die Wiedergabevorrichtung 2 übermittelt und dort im Datenspeicher 23 gespeichert.

Wie in den Figuren 1, 2, 3 und 4 schematisch dargestellt ist, umfassen die Wiedergabevorrichtungen 1, 2 jeweils eine Benutzerschnittstelle 11 respektive 21 zur Wiedergabe von Berechtigungsdaten respektive Referenzdaten. Die Benutzerschnittstellen 11, 21 umfassen vorzugsweise eine Anzeige 11 a, 21 a zur Darstellung von visuellen Objekten wie Bilder, Grafiken, Video und Text. Die Benutzerschnittstellen 11, 21 umfassen zudem einen elektroakustischen Wandler 11 b, 21 b (Lautsprecher, Kopfhörer) zur Wiedergabe von Audioobjekten wie Sprache, Klangmuster, Geräusche oder Musik. Die Benutzerschnittstelle 11 respektive 21 kann auch weitere Module zur Wiedergabe von Berechtigungsdaten respektive Referenzdaten umfassen, die über die Sinnesorgane eines Benutzers wahrgenommen werden können, zum Beispiel ein Vibrationsmodul oder ein Aktuatormodul zur Erzeugung von Codes, die vom Benutzer taktil wahrgenommen werden können (zum Beispiel in Blindenschrift).

Die Wiedergabevorrichtung 1 umfasst zudem ein Wiedergabemodul 12 um Berechtigungsdaten, die im Datenspeicher 13 gespeichert sind, über die Benutzerschnittstelle 11 wiederzugeben oder um Berechtigungsdaten, die im Push-Modus von der Berechtigungszentrale 3 empfangen wurden, über die Benutzerschnittstelle 11 wiederzugeben. Die Wiedergabevorrichtung 2 umfasst ein entsprechendes Wiedergabemodul 22 um Referenzdaten, die im Datenspeicher 23 gespeichert sind, über die Benutzerschnittstelle 21 wiederzugeben, oder um Referenzdaten, die im Push-Modus von der Berechtigungszentrale 3 empfangen wurden, über die Benutzerschnittstelle 21 wiederzugeben. Die Wiedergabe der Berechtigungsdaten respektive Referenzdaten durch die Wiedergabemodule 12 respektive 22 erfolgt vorzugsweise basierend auf einem Synchronisierungssignal, wie später näher beschrieben wird.

Die Berechtigungsdaten und die Referenzdaten umfassen Datenobjekte wie digitalisierte Bild-, Video-, Text-, Zahlen-, Grafik- und/oder Audioinformationen. Zudem umfassen die Berechtigungsdaten und die Referenzdaten vorzugsweise Angaben zur Veränderung von Wiedergabeattributen. Die Angaben zur Veränderung von Wiedergabeattributen können in der Ausführungsvariante nach Figur 2 auch von der Berechtigungszentrale 3, beispielsweise zusammen mit dem Synchronisierungssignal, an die Wiedergabevorrichtungen 1, 2 übermittelt werden. Die Wiedergabeattribute bestimmen die Wiedergabe der Berechtigungsdaten respektive die Wiedergabe der Referenzdaten. Die Wiedergabeattribute umfassen insbesondere visuelle Attribute von darstellbaren Objekten, wie Farbe, Orientierung, Bildausschnittidentifizierung, Position oder Schrifttyp, oder Audioattribute von akustisch wiedergebbaren Objekten, wie Lautstärke, Tonhöhe oder Tonlänge. Die Angaben zur Veränderung der Wiedergabeattribute umfassen Attributänderungsinstruktionen, Attributänderungsregeln und/oder Attributänderungsalgorithmen. Je nach Ausführung umfassen die Angaben zur Veränderung der Wiedergabeattribute auch Attributänderungsparameter wie Werte von Wiedergabeattributen und/oder Objektidentifizierungen.

In der oben erwähnten Dienstleistertrennungsvariante, die in der Figur 7 dargestellt ist, umfassen die Berechtigungsdaten keine Angaben zur Veränderung von Wiedergabeattributen, sondern bloss zu verifizierende Informationen, beispielsweise Angaben zur Bestimmung einer Dienstleistung, wie eine Dienstbezeichnung, oder Angaben über persönliche Informationen eines Benutzers, wie die Solvenz eines Benutzers. Wie mittels des Pfeils 36 schematisch dargestellt ist, wird von der Berechtigungszentrale 3 ein Datenbeleg mit der oben erwähnten Verifizierungsidentifizierung und mit Angaben über den gewünschten Sicherheitsgrad an die Wiedergabesteuerzentrale 3' übermittelt, beispielsweise über das Telekommunikationsnetz 8. In der Wiedergabesteuerzentrale 3' werden auf Grund des empfangenen Sicherheitsgrads gespeicherte Datenobjekte, wie digitalisierte Bild-, Video-, Text-, Zahlen-, Grafik- und/oder Audioinformationen, sowie Angaben zur Veränderung von Wiedergabeattributen, beispielsweise sich ändernde Wiedergabeattribute, bestimmt. Die bestimmten Datenobjekte, die Angaben zur Veränderung von Wiedergabeattributen sowie die Verifizierungsidentifizierung werden von der Wiedergabesteuerzentrale 3' als Wiedergabesteuerdaten über das Telekommunikationsnetz 8 an die Wiedergabevorrichtung 1 übermittelt, wie durch den gestrichelten Pfeil 39 schematisch dargestellt ist. Mit den Referenzdaten werden die bestimmten Datenobjekte sowie die Angaben zur Veränderung von Wiedergabeattributen zudem von der Wiedergabesteuerzentrale 3' über das Telekommunikationsnetz 8 an die Wiedergabevorrichtung 2 übermittelt, wie durch den gestrichelten Pfeil 38 schematisch dargestellt ist. Die Referenzdaten umfassen zudem einen Referenztext, der beispielsweise Angaben zur Identifizierung der Wiedergabesteuerzentrale 3' respektive des Betreibers der Wiedergabesteuerzentrale 3' umfasst. Die Adressierung der Wiedergabevorrichtungen 1, 2 durch die Wiedergabesteuerzentrale 3' erfolgt auf Grund der Verifizierungsidentifizierung. Die Adressinformationen der Wiedergabevorrichtungen 1, 2 sind beispielsweise in der Verifizierungsidentifizierung enthalten oder können mittels der Verifizierungsidentifizierung in einer Registrierungsdatenbank abgefragt werden.

Durch die Verwendung von Synchronisierungssignalen oder durch die Übermittlung von Berechtigungsdaten und Referenzdaten im Push-Modus wird eine Synchronisation der Wiedergabe der Berechtigungsdaten durch das Wiedergabemodul 12 und der Wiedergabe der Referenzdaten durch das Wiedergabemodul 22 erreicht. Bei der auf Synchronisierungssignalen basierenden Synchronisierung werden die Berechtigungsdaten und die Referenzdaten durch das Wiedergabemodul 12 respektive 22 basierend auf den zugeordneten Angaben zur Veränderung der Wiedergabeattribute wiedergegeben. Je nach Ausführung starten die Synchronisierungssignale automatisch ablaufende Attributänderungsalgorithmen oder sie initiieren die Ausführung einer Attributänderungsinstruktion oder Attributänderungsregel unter Verwendung von zugeordneten Werten von Wiedergabeattributen wie später an einem Beispiel illustriert wird. Durch die Ausführung eines Attributänderungsalgorithmus oder durch die Ausführung mehrerer Attributänderungsinstruktionen oder Attributänderungsregeln wird die Wiedergabe der Berechtigungsdaten und die Wiedergabe der Referenzdaten dynamisch verändert. Wenn eine Übereinstimmung zwischen der Wiedergabe der Berechtigungsdaten über die Benutzerschnittstelle 11 der Wiedergabevorrichtung 1 und der Wiedergabe der Referenzdaten über die Benutzerschnittstelle 21 der Wiedergabevorrichtung 2 besteht und die Veränderungen der Wiedergabeattribute dabei im Wesentlichen zeitsynchronisiert sind, kann dem Benutzer der Wiedergabevorrichtung 1 durch einen Kontrolleur, der die Wiedergabevorrichtung 2 benutzt, eine Berechtigung gewährt werden. Für die Übereinstimmung zwischen der Wiedergabe der Berechtigungsdaten über die Benutzerschnittstelle 11 der Wiedergabevorrichtung 1 und der Wiedergabe der Referenzdaten über die Benutzerschnittstelle 21 der Wiedergabevorrichtung 2 wird mindestens eine Übereinstimmung in den Wiedergabeattributen vorausgesetzt.

Die Synchronisierungssignale können periodische oder aperiodische Signale sein. Die Synchronisierungssignale sind beispielsweise abhängig von den Berechtigungsdaten respektive von den Referenzdaten.

In der Ausführungsvariante nach Figur 1 umfassen die Wiedergabevorrichtungen 1, 2 jeweils ein Synchronisierungsmodul 14 respektive 24 zur Erzeugung eines Synchronisierungssignals, das als Basis für die Wiedergabe der Berechtigungsdaten respektive der Referenzdaten dient. Die Synchronisierungsmodule 14, 24 umfassen beispielsweise ein Zeitbestimmungsmodul, das die aktuelle Zeit oder eine bestimmte Zeitdauer basierend auf einem Taktgenerator und/oder basierend auf empfangenen Zeitangaben bestimmt.

In der Ausführungsvariante nach Figur 3 umfasst nur eine der Wiedergabevorrichtungen 1, 2 ein Synchronisierungsmodul 14 zur Erzeugung des Synchronisierungssignals. Zusätzlich umfassen die Wiedergabevorrichtungen 1, 2 nach Figur 3 jedoch eine Geräteschnittstelle 15 respektive 25, um das erzeugte Synchronisierungssignal an die betreffende andere Wiedergabevorrichtung zu übertragen (Pfeil 26), beispielsweise eine Infrarotschnittstelle oder eine Funkgeräteschnittstelle wie "Bluetooth".

In der Ausführungsvariante nach Figur 2 umfasst die Berechtigungszentrale 3 ein Synchronisierungsmodul 30 zur Erzeugung und Übermittlung eines Synchronisierungssignals (Pfeil 33) an die Wiedergabevorrichtungen 1, 2.

In der Ausführungsvariante nach Figur 7 ist das Synchronisierungsmodul 30 in der Synchronisierungszentrale 3" angeordnet und das Synchronisierungssignal wird gemäss Pfeil 33' von der Synchronisierungszentrale 3" an die Wiedergabevorrichtungen 1, 2 übermittelt.

Die Berechtigungsdaten respektive Referenzdaten umfassen beispielsweise ein Bildobjekt 6, das mehrere Bildsegmente S1 bis S16 umfasst, wie in der Figur 6 schematisch dargestellt ist. Die Berechtigungsdaten respektive Referenzdaten umfassen zudem einen in der Figur 6 dargestellten Datenbeleg 7 mit Angaben zur Veränderung von Wiedergabeattributen. Der Datenbeleg 7 umfasst eine Bildobjektidentifizierung 71 zur Identifizierung des Bildobjekts 6 und eine zufallsgenerierte Sequenz 72 von Bildsegmentidentifizierungen der Bildsegmente S1 bis S16. Die Sequenz der Bildsegmentidentifizierungen kann auch durch einen Attributänderungsalgorithmus dynamisch erzeugt werden. In der Dienstleistertrennungsvariante nach Figur 7 werden das Bildobjekt 6 und der Datenbeleg 7 von der Wiedergabesteuerzentrale 3' in den Wiedergabesteuerdaten an die Wiedergabevorrichtung 1 übermittelt.

Synchronisiert durch Synchronisierungssignale bestimmen die Wiedergabemodule 12, 22 auf Grund der Bildobjektidentifizierung 71 das Bildobjekt 6 und wählen aus den Bildsegmenten S1 bis S16 dasjenige zur Wiedergabe aus, dass durch die erste Bildsegmentidentifizierung in der Sequenz 72 bestimmt ist. Die Bestimmung des Bildsegments durch die Wiedergabemodule 12, 22 erfolgt durch die Ausführung von entsprechenden Attributänderungsalgorithmen, Attributänderungsinstruktionen oder Attributänderungsregeln, die Teil der Softwaremodule der Wiedergabemodule 12, 22 sind oder die in den Angaben zur Veränderung von Wiedergabeattributen enthalten sind. Entsprechend dem betreffenden Attributänderungsalgorithmus oder den betreffenden Attributänderungsregeln wählen die Wiedergabemodule 12, 22 beim nächsten Signalisierungssignal oder nach einer vordefinierten Zeitdauer das nächste Bildsegment zur Wiedergabe aus, das durch die nächste Bildsegmentidentifizierung in der Sequenz 72 bestimmt ist. Den Bildsegmentidentifizierungen können in der Sequenz 72 jedoch auch Zeitangaben zugeordnet sein, welche bestimmen, welches der Bildsegmente S1 bis S16 zu einem bestimmten Zeitpunkt oder nach einer bestimmten Zeitdauer durch die Wiedergabemodule 12, 22 zur Wiedergabe gewählt wird.

Die Berechtigungsdaten respektive Referenzdaten umfassen zudem eine Dienstbezeichnung, beispielsweise die Bezeichnung einer Dienstleistung, eines Systems oder eines Gebäudes in Form von Textdaten. Der Dienstbezeichnung sind Angaben zur Veränderung von Wiedergabeattributen zugeordnet, die jeweils die Position und die Schriftart der Dienstbezeichnung für die Wiedergabe zu einem durch Synchronisationssignale bestimmten Zeitpunkt bestimmen. In der Dienstleistertrennungsvariante nach Figur 7 umfassen die Referenzdaten an Stelle der Dienstbezeichnung respektive an Stelle der zu verifizierenden Informationen den oben erwähnten Referenztext.

Die Berechtigungsdaten respektive Referenzdaten umfassen optional auch eine Benutzeridentifizierungsfeld, das heisst, Angaben zur Bestimmung eines Anzeigesegments, in welchem eine Benutzeridentifizierung darstellbar ist. Dem Benutzeridentifizierungsfeld sind Angaben zur Veränderung von Wiedergabeattributen zugeordnet, die jeweils die Position des Benutzeridentifizierungsfelds für die Wiedergabe der Benutzeridentifizierung zu einem durch Synchronisationssignale bestimmten Zeitpunkt bestimmen.

In den folgenden Abschnitten wird mit Bezug auf die Figuren 5a und 5b der Verfahrensablauf bei einer Berechtigungskontrolle beschrieben. Bei der Berechtigungskontrolle werden die Wiedergabemodule 12, 22 zur Wiedergabe der Berechtigungsdaten respektive Referenzdaten aktiviert. Auf die Wahl der betreffenden Berechtigungsdaten respektive Referenzdaten für die betreffende Dienstleistung oder den Zugang zum betreffenden System oder Gebäude wird hier nicht näher eingegangen. Auch auf die Möglichkeit der Teilentwertung von Berechtigungsdaten, beispielsweise wie bei Mehrfahrtenkarten, wird hier nicht näher eingegangen. In der Figur 5a sind die Bildinhalte dargestellt, die zu den Zeitpunkten T1, T2 und T3 auf der Anzeige 21a der Wiedergabevorrichtung 2 dargestellt werden. In der Figur 5b sind die Bildinhalte dargestellt, die zu denselben Zeitpunkten T1, T2 und T3 auf der Anzeige 11a der Wiedergabevorrichtung 1 dargestellt werden.

In der Figur 5a bezeichnet das Bezugszeichen 4 den Bildinhalt, der zum Zeitpunkt T1 auf der Anzeige 21 a der Wiedergabevorrichtung 2 dargestellt wird. Der wiedergegebene Bildinhalt 4 beruht auf der Wiedergabe der Referenzdaten, die im Datenspeicher 23 gespeichert sind oder im Push-Modus über das Telekommunikationsnetz 8 in der Wiedergabevorrichtung 2 empfangen werden. Der wiedergegebene Bildinhalt 4 wird einerseits durch die Angaben zur Veränderung der Wiedergabeattribute bestimmt, die in den Referenzdaten enthalten sind oder über das Telekommunikationsnetz 8 in der Wiedergabevorrichtung 2 empfangen werden, und andererseits durch das Synchronisierungssignal, das in der Wiedergabevorrichtung 2 erzeugt wird oder über das Telekommunikationsnetz 8 oder die Geräteschnittstelle 25 in der Wiedergabevorrichtung 2 empfangen wird. Der Bildinhalt 4 umfasst ein Bildobjekt, z.B. eine Blume, das beispielsweise wie oben mit Bezug zu Figur 6 beschrieben bestimmt wird. Neben dem Bildobjekt der Blume umfasst der Bildinhalt 4 ein Benutzeridentifizierungsfeld 41 zur Wiedergabe einer Benutzeridentifizierung, wobei die geometrische Position des Benutzeridentifizierungsfeldes 41 durch ein entsprechendes, zum Zeitpunkt T1 aktives Wiedergabeattribut bestimmt ist. Zudem umfasst der Bildinhalt 4 eine Dienstbezeichnung 42, deren geometrische Position und deren Schriftart durch entsprechende, zum Zeitpunkt T1 aktive Wiedergabeattribute bestimmt sind.

In der Figur 5b bezeichnet das Bezugszeichen 5 den Bildinhalt, der zum Zeitpunkt T1 auf der Anzeige 11a der Wiedergabevorrichtung 1 dargestellt wird. Der wiedergegebene Bildinhalt 5 beruht auf der Wiedergabe der Berechtigungsdaten, die im Datenspeicher 13 gespeichert sind oder im Push-Modus über das Telekommunikationsnetz 8 in der Wiedergabevorrichtung 1 empfangen werden. Der wiedergegebene Bildinhalt 5 wird einerseits durch die Angaben zur Veränderung der Wiedergabeattribute bestimmt, die in den Berechtigungsdaten enthalten sind oder über das Telekommunikationsnetz 8 in der Wiedergabevorrichtung 1 empfangen werden, und andererseits durch das Synchronisierungssignal, das in der Wiedergabevorrichtung 1 erzeugt wird oder über das Telekommunikationsnetz 8 oder die Geräteschnittstelle 15 in der Wiedergabevorrichtung 1 empfangen wird. In der Dienstleistertrennungsvariante nach Figur 7 werden die Berechtigungsdaten von der Berechtigungszentrale 3 und die Wiedergabesteuerdaten von der Wiedergabesteuerzentrale 3' in der Wiedergabevorrichtung 1 auf Grund der Verifizierungsidentifizierung einander zugeordnet. Wenn die wiedergegebenen Berechtigungsdaten zu einer gewährbaren Berechtigung führen sollen, umfasst der Bildinhalt 5 das selbe Bildobjekt, d.h. die selbe Blume, wie im Bildinhalt 4. Zudem muss der Bildinhalt 5 ein Benutzeridentifizierungsfeld 51 umfassen, dessen geometrische Position derjenigen des Benutzeridentifizierungsfeldes 41 entspricht. Schliesslich muss der Bildinhalt 5 je nach Anwendung dieselbe Dienstbezeichnung 52 wie die Dienstbezeichnung 42 oder eine inhaltlich nicht übereinstimmende Dienstbezeichnung 52 respektive den oben erwähnten Referenztext umfassen, jedoch müssen die Wiedergabeattribute der Dienstbezeichnung 52, nämlich die geometrische Position und Schriftart, den Wiedergabeattributen der Dienstbezeichnung 42 respektive des Referenztexts entsprechen. Wie in der Figur 5a dargestellt ist, wird im Benutzeridentifizierungsfeld 51 eine Benutzeridentifizierung dargestellt, beispielsweise ein Bild des Benutzers oder sein Name. Die Benutzeridentifizierung kann beispielsweise fest in der Wiedergabevorrichtung 1 gespeichert oder Teil der Berechtigungsdaten sein oder auf einer in einer SIM-Karte (Subscriber Identity Module) gespeicherten Teilnehmeridentifizierung basieren.

Um jedoch eine Berechtigung zu gewähren, vergleicht der Kontrolleur die Wiedergabe der Referenzdaten auf der Anzeige 21 a seiner Wiedergabevorrichtung 2 mit der Wiedergabe der Berechtigungsdaten auf der Anzeige 11a der Wiedergabevorrichtung 1 des Benutzers während weiteren Zeitpunkten T2 und T3, die beispielsweise eine oder mehrere Sekunden auseinander liegen. Wie aus den Figuren 5a und 5b ersichtlich ist, ändern sich in den Bildinhalten 4' und 5' zum Zeitpunkt T2 und in den Bildinhalten 4" und 5" zum Zeitpunkt T3 jeweils die Wiedergabeattribute. Es wird jeweils, ein anderes Bildsegment des Bildobjekts 6 wiedergegeben, die Position und die Schriftart der Dienstbezeichnung 42 und der Dienstbezeichnung 52 respektive des Referenztexts ändern sich und die Position des Benutzeridentifizierungsfelds 41 respektive 51 verschiebt sich.

An dieser Stelle soll angeführt werden, dass in einer Ausführungsvariante eine Berechtigung auch gewährt werden kann, wenn die Wiedergabe der Referenzdaten auf der Anzeige 21 a der Wiedergabevorrichtung 2 des Kontrolleurs und die Wiedergabe der Berechtigungsdaten auf der Anzeige 11a der Wiedergabevorrichtung 1 des Benutzers zeitlich leicht verschoben erfolgt, beispielsweise wenn wiedergegebene Bildsequenzen nicht genau synchronisiert sind. Dazu ist es beispielsweise nützlich, wenn Bildinhalte nur teilweise ändern, so dass selbst bei nicht perfekter Synchronisation, wenigstens diejenigen Bildinhalte verglichen werden können, die sich bei einem Sequenzübergang nicht ändern.

Das beschriebene Verfahren wird vorzugsweise für die Berechtigungskontrolle oder für die allgemeine Verifizierung von Informationen in Fällen eingesetzt, in denen die Wiedergabevorrichtungen 1, 2 des Dienstbenutzers und des Kontrolleurs am Ort der Dienstleistung verglichen werden können, beispielsweise in öffentlichen Verkehrsmitteln oder bei der Zutrittskontrolle zu Sportveranstaltungen, Theater oder Kinos. Das beschriebene Verfahren kann aber auch eingesetzt werden, wenn die Wiedergabevorrichtungen 1, 2 des Dienstbenutzers und des Kontrolleurs voneinander entfernt sind. Im letzteren Fall beschreibt der Dienstbenutzer dem Kontrolleur die Wiedergabe der Berechtigungsdaten über eine Kommunikationsverbindung und der Kontrolleur vergleicht die Beschreibung mit der Wiedergabe der Referenzdaten. Bei voneinander entfernten Wiedergabevorrichtungen 1, 2 eignen sich insbesondere auch Berechtigungsdaten, die akustisch wiedergegeben und über eine Kommunikationsverbindung, beispielsweise eine Telefonverbindung, dem Kontrolleur zum Vergleich mit der akustischen Wiedergabe der Referenzdaten übermittelt werden.

## Patentansprüche

1. Berechtigungskontrollverfahren, umfassend:
Übermittlung von Berechtigungsdaten von einer Berechtigungszentrale (3) über ein Telekommunikationsnetz (8) an eine erste Wiedergabevorrichtung (1),
Übermittlung von Referenzdaten von einer Wiedergabesteuerzentrale (3') über das Telekommunikationsnetz (8) an eine zweite Wiedergabevorrichtung (2),
Übermittlung von Wiedergabesteuerdaten von der Wiedergabesteuerzentrale (3') über das Telekommunikationsnetz (8) an die erste Wiedergabevorrichtung (1), und Gewährung einer Berechtigung, wenn eine Übereinstimmung zwischen der Wiedergabe der Berechtigungsdaten über die Benutzerschnittstelle (11) der ersten Wiedergabevorrichtung (1) und einer Wiedergabe der Referenzdaten über eine Benutzerschnittstelle (21) der zweiten Wiedergabevorrichtung (2) besteht,
**gekennzeichnet durch** :
Veränderung von Wiedergabeattributen während einer Wiedergabe der Berechtigungsdaten über eine Benutzerschnittstelle (11) der ersten Wiedergabevorrichtung (1), so dass sich die Wiedergabe der Berechtigungsdaten dynamisch ändert, wobei die Veränderung der Wiedergabeattribute in der Wiedergabe der Berechtigungsdaten auf Grund der Wiedergabesteuerdaten von der Wiedergabesteuerzentrale (3') erfolgt,
wobei die Übereinstimmung zwischen der Wiedergabe der Berechtigungsdaten und der Wiedergabe der Referenzdaten mindestens in den Wiedergabeattributen besteht und Veränderungen der Wiedergabeattribute zeitsynchronisiert sind.

2. Berechtigungskontrollverfahren nach Anspruch 1, **dadurch gekennzeichnet, dass** die Berechtigungsdaten von der Berechtigungszentrale (3) zusammen mit einer Verifizierungsidentifizierung an die erste Wiedergabevorrichtung (1) übermittelt und dort in einem Datenspeicher (13) gespeichert werden, dass die Wiedergabesteuerdaten von der Wiedergabesteuerzentrale (3') mit der Verifizierungsidentifizierung an die erste Wiedergabevorrichtung (1) übermittelt werden, und dass die Berechtigungsdaten und die Wiedergabesteuerdaten in der ersten Wiedergabevorrichtung (1) auf Grund der Verifizierungsidentifizierung einander zugeordnet werden.

3. Berechtigungskontrollverfahren nach Anspruch 2, **dadurch gekennzeichnet, dass** von der Berechtigungszentrale (3) die Verifizierungsidentifizierung und Angaben über einen gewünschten Sicherheitsgrad an die Wiedergabesteuerzentrale (3') übermittelt werden, und dass in der Wiedergabesteuerzentrale (3') auf Grund des empfangenen Sicherheitsgrads die Wiedergabesteuerdaten bestimmt werden.

4. Berechtigungskontrollverfahren nach Anspruch 3, **dadurch gekennzeichnet, dass** in der Wiedergabesteuerzentrale (3') auf Grund des empfangenen Sicherheitsgrads ein oder mehrere Datenobjekte und Angaben zur Veränderung von Wiedergabeattributen bestimmt werden, dass die Wiedergabesteuerdaten mit den Datenobjekten und Angaben zur Veränderung von Wiedergabeattributen an die erste Wiedergabevorrichtung (1) übermittelt werden, und dass die Datenobjekte und Angaben zur Veränderung von Wiedergabeattributen mit den Referenzdaten an die zweite Wiedergabevorrichtung (1) übermittelt werden.

5. Berechtigungskontrollverfahren nach einem der Ansprüche 3 oder 4, **dadurch gekennzeichnet, dass** die Wiedergabesteuerzentrale (3') auf Grund der Verifizierungsidentifizierung Adressinformationen zur Adressierung der ersten und zweiten Wiedergabevorrichtung (1, 2) bestimmt.

6. Berechtigungskontrollverfahren nach Anspruch 1, **dadurch gekennzeichnet, dass** die Wiedergabe der Berechtigungsdaten über die Benutzerschnittstelle (11) der ersten Wiedergabevorrichtung (1) auf einem ersten Synchronisierungssignal basiert, dass die Wiedergabe der Referenzdaten über die Benutzerschnittstelle (21) der zweiten Wiedergabevorrichtung (2) auf einem zweiten Synchronisierungssignal basiert, dass das erste Synchronisierungssignal in der ersten Wiedergabevorrichtung (1) erzeugt wird, und dass das zweite Synchronisierungssignal in der zweiten Wiedergabevorrichtung (2) erzeugt wird.

7. Berechtigungskontrollverfahren nach Anspruch 1, **dadurch gekennzeichnet, dass** die Wiedergabe der Berechtigungsdaten über die Benutzerschnittstelle (11) der ersten Wiedergabevorrichtung (1) auf einem ersten Synchronisierungssignal basiert, dass die Wiedergabe der Referenzdaten über die Benutzerschnittstelle (21) der zweiten Wiedergabevorrichtung (2) auf einem zweiten Synchronisierungssignal basiert, und dass das erste Synchronisierungssignal in der ersten Wiedergabevorrichtung (1) auf Grund eines Signals erzeugt wird, das in der ersten Wiedergabevorrichtung (1) von der zweiten Wiedergabevorrichtung (2) empfangen wurde, oder dass das zweite Synchronisierungssignal in der zweiten Wiedergabevorrichtung (2) auf Grund eines Signals erzeugt wird, das in der zweiten Wiedergabevorrichtung (2) von der ersten Wiedergabevorrichtung (1) empfangen wurde.

8. Berechtigungskontrollverfahren nach Anspruch 1, **dadurch gekennzeichnet, dass** die Wiedergabe der Berechtigungsdaten über die Benutzerschnittstelle (11) der ersten Wiedergabevorrichtung (1) auf einem ersten Synchronisierungssignal basiert, dass die Wiedergabe der Referenzdaten über die Benutzerschnittstelle (21) der zweiten Wiedergabevorrichtung (2) auf einem zweiten Synchronisierungssignal basiert, und dass das erste Synchronisierungssignal und das zweite Synchronisierungssignal in der ersten Wiedergabevorrichtung (1) respektive in der zweiten Wiedergabevorrichtung (2) auf Grund eines von einer computerbasierten Berechtigungszentrale (3) empfangenen Signals erzeugt werden.

9. Berechtigungskontrollverfahren nach Anspruch 1, **dadurch gekennzeichnet, dass** die Wiedergabe der Berechtigungsdaten über die Benutzerschnittstelle (11) der ersten Wiedergabevorrichtung (1) und die Wiedergabe der Referenzdaten über die Benutzerschnittstelle (21) der zweiten Wiedergabevorrichtung (2) auf einem von einer computerbasierten Synchronisierungszentrale (3") empfangenen Synchronisierungssignal basieren.

10. Berechtigungskontrollverfahren nach einem der Ansprüche 1 bis 9, **dadurch gekennzeichnet, dass** eine Anzeige (11a, 21a) als Benutzerschnittstelle (11, 21) verwendet wird, auf der die Berechtigungsdaten und die Referenzdaten darstellbar sind, und dass Wiedergabeattribute verwendet werden, die visuelle Attribute wie Farbangaben, Orientierungsangaben, Angaben zur Bestimmung eines Bildausschnitts oder Positionsangaben umfassen.

11. Berechtigungskontrollverfahren nach einem der Ansprüche 1 bis 10, **dadurch gekennzeichnet, dass** Berechtigungsdaten verwendet werden, die Dienstbezeichnungen umfassen, dass Referenzdaten verwendet werden, die einen Referenztext umfassen, und dass Wiedergabeattribute verwendet werden, die Angaben über Schriftarten umfassen.

12. Berechtigungskontrollverfahren nach einem der Ansprüche 1 bis 11, **dadurch gekennzeichnet, dass**. Berechtigungsdaten verwendet werden, die Benutzeridentifizierungsdaten umfassen, und dass die Wiedergabe der Benutzeridentifizierungsdaten durch die Wiedergabeattribute bestimmt wird.

13. Berechtigungskontrollverfahren nach einem der Ansprüche 1 bis 12, **dadurch gekennzeichnet, dass** ein elektroakustischer Wandler (11b, 21b) als Benutzerschnittstelle (11, 21) verwendet wird über den die Berechtigungsdaten und die Referenzdaten wiedergebbar sind, und dass Wiedergabeattribute verwendet werden, die Audioattribute wie Angaben über Lautstärke, Tonhöhe oder Tonlänge umfassen.

14. System zur Berechtigungskontrolle, umfassend:
eine computerbasierte Berechtigungszentrale (3) zum Übermitteln von Berechtigungsdaten über ein Telekommunikationsnetz (8) an eine erste Wiedergabevorrichtung (1),
eine computerbasierte Wiedergabesteuerzentrale (3') zum Übermitteln von Wiedergabesteuerdaten über das Telekommunikationsnetz (8) an die
erste Wiedergabevorrichtung (1) und zum Übermitteln von Referenzdaten über das Telekommunikationsnetz (8) an eine zweite Wiedergabevorrichtung (2), **gekennzeichnet durch**
Mittel zur Wiedergabe der Berechtigungsdaten über eine Benutzerschnittstelle (11) der ersten Wiedergabevorrichtung (1) und zur Veränderung von Wiedergabeattributen auf Grund der Wiedergabesteuerdaten während der Wiedergabe der Berechtigungsdaten zeitsynchronisiert mit der Wiedergabe der Referenzdaten über eine Benutzerschnittstelle (21) der zweiten Wiedergabevorrichtung (2), respektive mit Veränderungen von Wiedergabeattributen während der Wiedergabe der Referenzdaten, so dass sich die Wiedergabe der Berechtigungsdaten dynamisch ändert.

15. System nach Anspruch 14, **dadurch gekennzeichnet, dass** die Berechtigungszentrale (3) eingerichtet ist, die Berechtigungsdaten zusammen mit einer Verifizierungsidentifizierung an die erste Wiedergabevorrichtung (1) zu übermitteln, und dass die Wiedergabesteuerzentrale (3') eingerichtet ist, die Wiedergabesteuerdaten für die Zuordnung zu den Berechtigungsdaten mit der Verifizierungsidentifizierung an die erste Wiedergabevorrichtung (1) zu übermitteln.

16. System nach Anspruch 15, **dadurch gekennzeichnet, dass** die Berechtigungszentrale (3) eingerichtet ist, die Verifizierungsidentifizierung und Angaben über einen gewünschten Sicherheitsgrad an die Wiedergabesteuerzentrale (3') zu übermitteln, und dass die Wiedergabesteuerzentrale (3') eingerichtet ist, die Wiedergabesteuerdaten auf Grund des empfangenen Sicherheitsgrads zu bestimmen.

17. System nach Anspruch 16, **dadurch gekennzeichnet, dass** die Wiedergabesteuerzentrale (3') eingerichtet ist, auf Grund des empfangenen Sicherheitsgrads ein oder mehrere Datenobjekte und Angaben zur Veränderung von Wiedergabeattributen zu bestimmen, die Wiedergabesteuerdaten mit den Datenobjekten und Angaben zur Veränderung von Wiedergabeattributen an die erste Wiedergabevorrichtung (1) zu übermitteln, und die Datenobjekte und Angaben zur Veränderung von Wiedergabeattributen mit den Referenzdaten an die zweite Wiedergabevorrichtung (1) zu übermitteln.

18. System nach einem der Ansprüche 16 oder 17, **dadurch gekennzeichnet, dass** die Wiedergabesteuerzentrale (3') eingerichtet ist, auf Grund der Verifizierungsidentifizierung Adressinformationen zur Adressierung der ersten und zweiten Wiedergabevorrichtung (1, 2) zu bestimmen.

19. System nach Anspruch 14, **dadurch gekennzeichnet, dass** die erste Wiedergabevorrichtung (1) eingerichtet ist, die Berechtigungsdaten basierend auf einem ersten Synchronisierungssignal über die Benutzerschnittstelle (11) der ersten Wiedergabevorrichtung (1) wiederzugeben, dass die zweite Wiedergabevorrichtung (2) eingerichtet ist, die Referenzdaten basierend auf einem zweiten Synchronisierungssignal über die Benutzerschnittstelle (21) der zweiten Wiedergabevorrichtung (2) wiederzugeben, dass die erste Wiedergabevorrichtung (1) eingerichtet ist, das erste Synchronisierungssignal zu erzeugen, und dass die zweite Wiedergabevorrichtung (2) eingerichtet ist das zweite Synchronisierungssignal zu erzeugen.

20. System nach Anspruch 14, **dadurch gekennzeichnet, dass** die erste Wiedergabevorrichtung (1) eingerichtet ist, die Berechtigungsdaten basierend auf einem ersten Synchronisierungssignal über die Benutzerschnittstelle (11) der ersten Wiedergabevorrichtung (1) wiederzugeben, dass die zweite Wiedergabevorrichtung (2) eingerichtet ist, die Referenzdaten basierend auf einem zweiten Synchronisierungssignal über die Benutzerschnittstelle (21) der zweiten Wiedergabevorrichtung (2) wiederzugeben, und dass die erste Wiedergabevorrichtung (1) eingerichtet ist, ein Signal von der zweiten Wiedergabevorrichtung (2) zu empfangen und das erste Synchronisierungssignal auf Grund des empfangenen Signals zu erzeugen, oder dass die zweite Wiedergabevorrichtung (2) eingerichtet ist, ein Signal von der ersten Wiedergabevorrichtung (1) zu empfangen und das zweite Synchronisierungssignal auf Grund des empfangenen Signals zu erzeugen.

21. System nach Anspruch 14, **dadurch gekennzeichnet, dass** die erste Wiedergabevorrichtung (1) eingerichtet ist, die Berechtigungsdaten basierend auf einem ersten Synchronisierungssignal über die Benutzerschnittstelle (11) der ersten Wiedergabevorrichtung (1) wiederzugeben, dass die zweite Wiedergabevorrichtung (2) eingerichtet ist, die Referenzdaten basierend auf einem zweiten Synchronisierungssignal über die Benutzerschnittstelle (21) der zweiten Wiedergabevorrichtung (2) wiederzugeben, dass die erste Wiedergabevorrichtung (1) und die zweite Wiedergabevorrichtung (2) eingerichtet sind ein Signal von einer computerbasierten Berechtigungszentrale (3) zu empfangen, und dass die erste Wiedergabevorrichtung (1) und die zweite Wiedergabevorrichtung (2) eingerichtet sind, das erste Synchronisierungssignal respektive das zweite Synchronisierungssignal auf Grund des empfangenen Signals zu erzeugen.

22. System nach Anspruch 14, **gekennzeichnet durch** eine computerbasierte Synchronisierungszentrale (3") zum Generieren eines Synchronisierungssignals zur Synchronisation der Wiedergabe der Berechtigungsdaten über die Benutzerschnittstelle (11) der ersten Wiedergabevorrichtung (1) und der Wiedergabe der Referenzdaten über die Benutzerschnittstelle (21) der zweiten Wiedergabevorrichtung (2).

23. System nach einem der Ansprüche 14 bis 22, **dadurch gekennzeichnet, dass** die Benutzerschnittstellen (11, 21) jeweils eine Anzeige (11a, 21 a) zur Darstellung der Berechtigungsdaten respektive Referenzdaten umfassen, und dass die Wiedergabeattribute visuelle Attribute wie Farbangaben, Orientierungsangaben, Angaben zur Bestimmung eines Bildausschnitts, Positionsangaben oder Angaben über Schriftarten umfassen.

24. System nach einem der Ansprüche 14 bis 23, **dadurch gekennzeichnet, dass** die Benutzerschnittstellen jeweils einen elektroakustischen Wandler (11 b, 21 b) zur Wiedergabe der Berechtigungsdaten respektive Referenzdaten umfassen, und dass die Wiedergabeattribute Audioattribute wie Angaben über Lautstärke, Tonhöhe oder Tonlänge umfassen.

25. System nach einem der Ansprüche 14 bis 24, **dadurch gekennzeichnet, dass** die erste Wiedergabevorrichtung (1) als mobiles Kommunikationsendgerät ausgeführt ist.

26. System nach einem der Ansprüche 14 bis 24, **dadurch gekennzeichnet, dass** die erste Wiedergabevorrichtung (1) als Chipkarte ausgeführt ist.

27. Computerprogrammprodukt, das ein computerlesbares Medium mit darin enthaltenen Computerprogrammcodemitteln umfasst zur Steuerung eines oder mehrerer Prozessoren einer in einem Berechtigungskontrollverfahren verwendbaren ersten elektronischen Wiedergabevorrichtung (1), derart, dass die erste Wiedergabevorrichtung (1) Berechtigungsdaten über ein Telekommunikationsnetz (8) von einer computerbasierten Berechtigungszentrale (3) entgegennimmt, dass die erste Wiedergabevorrichtung (1) Wiedergabesteuerdaten über das Telekommunikationsnetz (8) von einer computerbasierten Wiedergabesteuerzentrale (3') entgegennimmt, dass die erste Wiedergabevorrichtung (1) Berechtigungsdaten über eine Benutzerschnittstelle (11) der ersten Wiedergabevorrichtung (1) wiedergibt und während der Wiedergabe der Berechtigungsdaten auf Grund der Wiedergabesteuerdaten Wiedergabeattribute verändert, so dass sich die Wiedergabe der Berechtigungsdaten dynamisch ändert, wobei die Wiedergabe der Berechtigungsdaten und die Veränderungen der Wiedergabeattribute während der Wiedergabe der Berechtigungsdaten zeitsynchronisiert erfolgt mit einer Wiedergabe von Referenzdaten über eine Benutzerschnittstelle (21) einer zweiten elektronischen Wiedergabevorrichtung (2) respektive mit Veränderungen von Wiedergabeattributen während der Wiedergabe der Referenzdaten.

28. Computerprogrammprodukt gemäss Anspruch 27, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) die Berechtigungsdaten zusammen mit einer Verifizierungsidentifizierung entgegennimmt, dass die erste Wiedergabevorrichtung (1) die Wiedergabesteuerdaten mit der Verifizierungsidentifizierung entgegennimmt, und dass die erste Wiedergabevorrichtung (1) die Berechtigungsdaten und die Wiedergabesteuerdaten einander auf Grund der Verifizierungsidentifizierung zuordnet.

29. Computerprogrammprodukt gemäss Anspruch 27, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) die Berechtigungsdaten basierend auf einem Synchronisierungssignal über die Benutzerschnittstelle (11) der ersten Wiedergabevorrichtung (1) wiedergibt, und dass die erste Wiedergabevorrichtung (1) das Synchronisierungssignal erzeugt.

30. Computerprogrammprodukt gemäss Anspruch 27, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) die Berechtigungsdaten basierend auf einem Synchronisierungssignal über die Benutzerschnittstelle (11) der ersten Wiedergabevorrichtung (1) wiedergibt, und dass die erste Wiedergabevorrichtung (1) das Synchronisierungssignal auf Grund eines Signals erzeugt, das die erste Wiedergabevorrichtung (1) von der zweiten Wiedergabevorrichtung (2) empfängt, oder dass die erste Wiedergabevorrichtung (1) ein Signal an die zweite Wiedergabevorrichtung (2) übermittelt zur Erzeugung eines Synchronisierungssignals in der zweiten Wiedergabevorrichtung (2).

31. Computerprogrammprodukt gemäss Anspruch 27, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) die Berechtigungsdaten basierend auf einem Synchronisierungssignal über die Benutzerschnittstelle (11) der ersten Wiedergabevorrichtung (1) wiedergibt, dass die erste Wiedergabevorrichtung (1) ein Signal von einer computerbasierten Zentrale (3, 3") über ein Telekommunikationsnetz (8) entgegennimmt, und dass die erste Wiedergabevorrichtung (1) das Synchronisierungssignal auf Grund des entgegengenommenen Signals erzeugt.

## Claims

1. An authorisation checking method, comprising:
transmission of authorisation data from an authorisation centre (3) via a telecommunication network (8) to a first reproduction device (1),
transmission of reference data from a reproduction control centre (3') via the telecommunication network (8) to a second reproduction device (2),
transmission of reproduction control data from the reproduction control centre (3') via the telecommunication network (8) to the first reproduction device (1), and
granting of authorisation if there is a match between the reproduction of the authorisation data using the user interface (11) of the first reproduction device (1) and the reproduction of the reference data using a user interface (21) of the second reproduction device (2),
**characterised by**
alteration of reproduction attributes during reproduction of the authorisation data using a user interface (11) of the first reproduction device (1), such that reproduction of the authorisation data changes dynamically, alteration of the reproduction attributes during reproduction of the authorisation data taking place on the basis of the reproduction control data from the reproduction control centre (3'),
the match between the reproduction of the authorisation data and the reproduction of the reference data consisting at least in the reproduction attributes, and alterations in the reproduction attributes being time-synchronised.

2. An authorisation checking method according to claim 1, **characterised in that** the authorisation data are transmitted from the authorisation centre (3) together with a verification identifier to the first reproduction device (1) and are stored there in a data memory (13), **in that** the reproduction control data are transmitted from the reproduction control centre (3') with the verification identifier to the first reproduction device (1), and **in that** the authorisation data and the reproduction control data are assigned to one another in the first reproduction device (1) on the basis of the verification identifier.

3. An authorisation checking method according to claim 2, **characterised in that** the verification identifier and details about a desired security level are transmitted from the authorisation centre (3) to the reproduction control centre (3'), and **in that** the reproduction control data are determined in the reproduction control centre (3') on the basis of the received security level.

4. An authorisation checking method according to claim 3, **characterised in that** one or more data objects and details for alteration of the reproduction attributes are determined in the reproduction control centre (3') on the basis of the received security level, **in that** the reproduction control data are transmitted with the data objects and details for alteration of reproduction attributes to the first reproduction device (1), and **in that** the data objects and details for alteration of reproduction attributes are transmitted with the reference data to the second reproduction device (1).

5. An authorisation checking method according to one of claims 3 or 4, **characterised in that** the reproduction control centre (3') determines address information for addressing the first and second reproduction devices (1, 2) on the basis of the verification identifier.

6. An authorisation checking method according to claim 1, **characterised in that** reproduction of the authorisation data using the user interface (11) of the first reproduction device (1) is based on a first synchronisation signal, **in that** reproduction of the reference data using the user interface (21) of the second reproduction device (2) is based on a second synchronisation signal, **in that** the first synchronisation signal is produced in the first reproduction device (1), and **in that** the second synchronisation signal is produced in the second reproduction device (2).

7. An authorisation checking method according to claim 1, **characterised in that** reproduction of the authorisation data using the user interface (11) of the first reproduction device (1) is based on a first synchronisation signal, **in that** reproduction of the reference data using the user interface (21) of the second reproduction device (2) is based on a second synchronisation signal, **in that** the first synchronisation signal is produced in the first reproduction device (1) on the basis of a signal which has been received in the first reproduction device (1) from the second reproduction device (2), or **in that** the second synchronisation signal is produced in the second reproduction device on the basis of a signal which has been received in the second reproduction device (2) from the first reproduction device (1).

8. An authorisation checking method according to claim 1, **characterised in that** reproduction of the authorisation data using the user interface (11) of the first reproduction device (1) is based on a first synchronisation signal, **in that** reproduction of the reference data using the user interface (21) of the second reproduction device (2) is based on a second synchronisation signal, and **in that** the first synchronisation signal and the second synchronisation signal are produced respectively in the first reproduction device (1) and in the second reproduction device (2) on the basis of a signal received from a computer-based authorisation centre (3).

9. An authorisation checking method according to claim 1, **characterised in that** reproduction of the authorisation data using the user interface (11) of the first reproduction device (1) and reproduction of the reference data using the user interface (21) of the second reproduction device (2) is based on a synchronisation signal received from a computer-based synchronisation centre (3").

10. An authorisation checking method according to any one of claims 1 to 9, **characterised in that** the user interface (11, 21) takes the form of a display (11a, 21a) on which the authorisation data and the reference data may be displayed, and **in that** reproduction attributes are used which comprise visual attributes such as colour details, orientation details, details relating to the determination of a picture section or position details.

11. An authorisation checking method according to any one of claims 1 to 10, **characterised in that** authorisation data are used which comprise service tags, **in that** reference data are used which comprise a reference text, and **in that** reproduction attributes are used which comprise details about fonts.

12. An authorisation checking method according to any one of claims 1 to 11, **characterised in that** authorisation data are used which comprise user identification data, and **in that** reproduction of the user identification data is determined by the reproduction attributes.

13. An authorisation checking method according to any one of claims 1 to 12, **characterised in that** the user interface (11, 21) takes the form of an electroacoustic transducer (11b, 21b) which may be used to reproduce the authorisation data and the reference data, and **in that** reproduction attributes are used which comprise audio attributes such as details about volume, pitch or tone length.

14. A system for authorisation checking, comprising:
a computer-based authorisation centre (3) for transmitting authorisation data via a telecommunication network (8) to a first reproduction device (1),
a computer-based reproduction control centre (3') for transmitting reproduction control data via the telecommunication network (8) to the first reproduction device (1) and for transmitting reference data via the telecommunication network (8) to a second reproduction device (2), **characterised by**
means for reproducing the authorisation data using a user interface (11) of the first reproduction device (1) and for altering reproduction attributes on the basis of the reproduction control data during reproduction of the authorisation data in time-synchronised manner respectively with reproduction of the reference data using the user interface (21) of the second reproduction device (2) and with alterations to reproduction attributes during reproduction of the reference data, such that reproduction of the authorisation data changes dynamically.

15. A system according to claim 14, **characterised in that** the authorisation centre (3) is set up to transmit the authorisation data together with a verification identifier to the first reproduction device (1), and **in that** the reproduction control centre (3') is set up to transmit the reproduction control data for assignment to the authorisation data with the verification identifier to the first reproduction device (1).

16. A system according to claim 15, **characterised in that** the authorisation centre (3) is set up to transmit the verification identifier and details about a desired security level to the reproduction control centre (3'), and **in that** the reproduction control centre (3') is set up to determine the reproduction control data on the basis of the received security level.

17. A system according to claim 16, **characterised in that** the reproduction control centre (3') is set up to determine one or more data objects and details for alteration of reproduction attributes on the basis of the received security level, to transmit the reproduction control data with the data objects and details for alteration of reproduction attributes to the first reproduction device (1), and to transmit the data objects and details for alteration of reproduction attributes with the reference data to the second reproduction device (1).

18. A system according to one of claims 16 or 17, **characterised in that** the reproduction control centre (3') is set up to determine address information for addressing the first and second reproduction devices (1, 2) on the basis of the verification identifier.

19. A system according to claim 14, **characterised in that** the first reproduction device (1) is set up to reproduce the authorisation data on the basis of a first synchronisation signal using the user interface (11) of the first reproduction device (1), **in that** the second reproduction device (2) is set up to reproduce the reference data on the basis of the second synchronisation signal using the user interface (21) of the second reproduction device (2), **in that** the first reproduction device (1) is set up to produce the first synchronisation signal, and **in that** the second reproduction device (2) is set up to produce the second synchronisation signal.

20. A system according to claim 14, **characterised in that** the first reproduction device (1) is set up to reproduce the authorisation data on the basis of a first synchronisation signal using the user interface (11) of the first reproduction device (1), **in that** the second reproduction device (2) is set up to reproduce the reference data on the basis of a second synchronisation signal using the user interface (21) of the second reproduction device (2), and **in that** the first reproduction device (1) is set up to receive a signal from the second reproduction device (2) and to produce the first synchronisation signal on the basis of the received signal, or **in that** the second reproduction device (2) is set up to receive a signal from the first reproduction device (1) and to produce the second synchronisation signal on the basis of the received signal.

21. A system according to claim 14, **characterised in that** the first reproduction device (1) is set up to reproduce the authorisation data on the basis of a first synchronisation signal using the user interface (11) of the first reproduction device (1), **in that** the second reproduction device (2) is set up to reproduce the reference data on the basis of a second synchronisation signal using the user interface (21) of the second reproduction device (2), **in that** the first reproduction device (1) and the second reproduction device (2) are set up to receive a signal from a computer-based authorisation centre (3), and **in that** the first reproduction device (1) and the second reproduction device (2) are set up to produce the first synchronisation signal and the second synchronisation signal respectively, on the basis of the received signal.

22. A system according to claim 14, **characterised by** a computer-based synchronisation centre (3") for generating a synchronisation signal for synchronising reproduction of the authorisation data using the user interface (11) of the first reproduction device (1) and reproduction of the reference data using the user interface (21) of the second reproduction device (2).

23. A system according to any one of claims 14 to 22, **characterised in that** the user interfaces (11, 21) each comprise a display (11a, 21a) for displaying the authorisation data and reference data respectively, and **in that** the reproduction attributes comprise visual attributes such as colour details, orientation details, details relating to the determination of a picture section, position details or details about fonts.

24. A system according to any one of claims 14 to 23, **characterised in that** the user interfaces each comprise an electroacoustic transducer (11b, 21b) for reproducing the authorisation data and reference data respectively, and **in that** the reproduction attributes comprise audio attributes such as details about volume, pitch or tone length.

25. A system according to any one of claims 14 to 24, **characterised in that** the first reproduction device (1) is in the form of a mobile communication terminal.

26. A system according to any one of claims 14 to 24, **characterised in that** the first reproduction device (1) is in the form of a chip card.

27. A computer program product which comprises a computer-readable medium containing computer program code means for the purpose of controlling one or more processors in a first electronic reproduction device (1) which may be used in an authorisation checking method, in such a way
that the first reproduction device (1) receives authorisation data via a telecommunication network (8) from a computer-based authorisation centre (3), that the first reproduction device (1) receives reproduction control data via the telecommunication network (8) from a computer-based reproduction control centre (3'), that the first reproduction device (1) reproduces authorisation data using a user interface (11) of the first reproduction device (1) and alters reproduction attributes on the basis of the reproduction control data during reproduction of the authorisation data, such that reproduction of the authorisation data changes dynamically, the authorisation data being reproduced and the reproduction attributes being altered during reproduction of the authorisation data in time-synchronised manner respectively with reproduction of reference data using a user interface (21) of a second electronic reproduction device (2) and with alterations of reproduction attributes during reproduction of the reference data.

28. A computer program product according to claim 27, **characterised in that** it comprises further computer program code means which control the processors of the first reproduction device (1) in such a way that the first reproduction device (1) receives the authorisation data together with a verification identifier, that the first reproduction device (1) receives the reproduction control data with the verification identifier, and that the first reproduction device (1) assigns the authorisation data and the reproduction control data to one another on the basis of the verification identifier.

29. A computer program product according to claim 27, **characterised in that** it comprises further computer program code means which control the processors of the first reproduction device (1) in such a way that the first reproduction device (1) reproduces the authorisation data on the basis of a synchronisation signal using the user interface (11) of the first reproduction device (1), and that the first reproduction device (1) produces the synchronisation signal.

30. A computer program product according to claim 27, **characterised in that** it comprises further computer program code means which control the processors of the first reproduction device (1) in such a way that the first reproduction device (1) reproduces the authorisation data on the basis of a synchronisation signal using the user interface (11) of the first reproduction device (1), and that the first reproduction device (1) produces the synchronisation signal on the basis of a signal which the first reproduction device (1) receives from the second reproduction device (2), or that the first reproduction device (1) transmits a signal to the second reproduction device (2) for the purpose of producing a synchronisation signal in the second reproduction device (2).

31. A computer program product according to claim 27, **characterised in that** it comprises further computer program code means which control the processors of the first reproduction device (1) in such a way that the first reproduction device (1) reproduces the authorisation data on the basis of a synchronisation signal using the user interface (11) of the first reproduction device (1), that the first reproduction device (1) receives a signal from a computer-based centre (3, 3") via a telecommunication network (8), and that the first reproduction device (1) produces the synchronisation signal on the basis of the received signal.

## Revendications

1. Procédé de contrôle d'autorisation, comprenant :
une transmission de données d'autorisation depuis une centrale d'autorisation (3) via un réseau de télécommunication (8) vers un premier dispositif de reproduction (1),
une transmission de données de référence depuis une centrale pilote de reproduction (3') via le réseau de télécommunication (8) vers un deuxième dispositif de reproduction (2),
une transmission de données pilotes de reproduction depuis la centrale pilote de reproduction (3') via le réseau de télécommunication (8) vers le premier dispositif de reproduction (1), et
un octroi d'une autorisation, dans le cas d'une concordance entre la reproduction des données d'autorisation via l'interface utilisateur (11) du premier dispositif de reproduction (1), et une reproduction de données de référence via une interface utilisateur (21) du deuxième dispositif de reproduction (2),
**caractérisé par** :
une modification d'attributs de reproduction pendant une reproduction des données d'autorisation via une interface utilisateur (11) du premier dispositif de reproduction (1), de telle sorte que la reproduction des données d'autorisation subit une modification dynamique, la modification des attributs de reproduction s'effectuant pendant la reproduction des données d'autorisation sur la base des données pilotes de reproduction par la centrale pilote de reproduction (3'),
la concordance entre la reproduction des données d'autorisation et la reproduction des données de référence consistant au moins dans les attributs de reproduction, et des modifications des attributs de reproduction étant synchronisées dans le temps.

2. Procédé de contrôle d'autorisation selon la revendication 1, **caractérisé en ce que** les données d'autorisation, conjointement avec une identification de la vérification, sont transmises par la centrale d'autorisation (3) vers le premier dispositif de reproduction (1) et, dans celui-ci, sont mémorisées dans une mémoire de données (13), **en ce que** les données pilotes de reproduction, conjointement avec l'identification de la vérification, sont transmises par la centrale pilote de reproduction (3') vers le premier dispositif de reproduction (1), et **en ce que** les données d'autorisation et les données pilotes de reproduction sont associées entre elles dans le premier dispositif de reproduction (1) sur la base de l'identification de la vérification.

3. Procédé de contrôle d'autorisation selon la revendication 2, **caractérisé en ce que** l'identification de la vérification et des informations sur un degré de sécurité souhaité sont transmises par la centrale d'autorisation (3) vers la centrale pilote de reproduction (3'), et **en ce que** les données pilotes de reproduction sont déterminées dans la centrale pilote de reproduction (3') sur la base du degré de sécurité reçu.

4. Procédé de contrôle d'autorisation selon la revendication 3, **caractérisé en ce qu'**un ou plusieurs objets de données et des informations sur la modification des attributs de reproduction sont déterminés dans la centrale pilote de reproduction (3') sur la base du degré de sécurité reçu, **en ce que** les données pilotes de reproduction sont transmises, avec les objets de données et les informations sur la modification des attributs de reproduction, vers le premier dispositif de reproduction (1), et **en ce que** les objets de données et les informations sur la modification des attributs de reproduction sont transmis, avec les données de référence, vers le deuxième dispositif de reproduction (2).

5. Procédé de contrôle d'autorisation selon la revendication 3 ou 4, **caractérisé en ce que** la centrale pilote de reproduction (3'), sur la base de l'identification de la vérification, détermine des informations d'adresse pour l'adressage du premier et du deuxième dispositif de reproduction (1, 2).

6. Procédé de contrôle d'autorisation selon la revendication 1, **caractérisé en ce que** la reproduction des données d'autorisation via l'interface utilisateur (11) du premier dispositif de reproduction (1) se base sur un premier signal de synchronisation, **en ce que** la reproduction des données de référence via l'interface utilisateur (21) du deuxième dispositif de reproduction (2) se base sur un deuxième signal de synchronisation, **en ce que** le premier signal de synchronisation est généré dans le premier dispositif de reproduction (1) et **en ce que** le deuxième signal de synchronisation est généré dans le deuxième dispositif de reproduction (2).

7. Procédé de contrôle d'autorisation selon la revendication 1, **caractérisé en ce que** la reproduction des données d'autorisation via l'interface utilisateur (11) du premier dispositif de reproduction (1) se base sur un premier signal de synchronisation, **en ce que** la reproduction des données de référence via l'interface utilisateur (21) du deuxième dispositif de reproduction (2) se base sur un deuxième signal de synchronisation, et **en ce que** le premier signal de synchronisation est généré dans le premier dispositif de reproduction (1) sur la base d'un signal qui été reçu dans le premier dispositif de reproduction (1) à partir du deuxième dispositif de reproduction (2) ou **en ce que** le deuxième signal de synchronisation est généré dans le deuxième dispositif de reproduction (2) sur la base d'un signal qui été reçu dans le deuxième dispositif de reproduction (2) à partir du premier dispositif de reproduction (1).

8. Procédé de contrôle d'autorisation selon la revendication 1, **caractérisé en ce que** la reproduction des données d'autorisation via l'interface utilisateur (11) du premier dispositif de reproduction (1) se base sur un premier signal de synchronisation, **en ce que** la reproduction des données de référence via l'interface utilisateur (21) du deuxième dispositif de reproduction (2) se base sur un deuxième signal de synchronisation, et **en ce que** le premier signal de synchronisation et le deuxième signal de synchronisation sont générés dans le premier dispositif de reproduction (1), respectivement dans le deuxième dispositif de reproduction (2), sur la base d'un signal reçu à partir d'une centrale d'autorisation (3) informatisée.

9. Procédé de contrôle d'autorisation selon la revendication 1, **caractérisé en ce que** la reproduction des données d'autorisation via l'interface utilisateur (11) du premier dispositif de reproduction (1) et la reproduction des données de référence via l'interface utilisateur (21) du deuxième dispositif de reproduction (2) se basent sur un signal de synchronisation reçu à partir d'une centrale de synchronisation (3") informatisée.

10. Procédé de contrôle d'autorisation selon l'une quelconque des revendications 1 à 9, **caractérisé en ce qu'**on utilise en tant qu'interface utilisateur (11, 21) un affichage (11a, 21a), sur lequel peuvent être représentées les données d'autorisation et les données de référence, et **en ce qu'**on utilise des attributs de reproduction, qui comprennent des attributs visuels, tels que des indications de couleurs, des indications d'orientation, des indications pour déterminer un extrait d'image ou des indications de position.

11. Procédé de contrôle d'autorisation selon l'une quelconque des revendications 1 à 10, **caractérisé en ce qu'**on utilise des données d'autorisation qui comprennent des désignations de service, **en ce qu'**on utilise des données de référence qui comprennent un texte de référence, et **en ce qu'**on utilise des attributs de reproduction qui comprennent des indications relatives à des types d'écriture.

12. Procédé de contrôle d'autorisation selon l'une quelconque des revendications 1 à 11, **caractérisé en ce qu'**on utilise des données d'autorisation qui comprennent des données d'identification des utilisateurs et **en ce que** la reproduction des données d'identification des utilisateurs est déterminée par les attributs de reproduction.

13. Procédé de contrôle d'autorisation selon l'une quelconque des revendications 1 à 12, **caractérisé en ce qu'**on utilise en tant qu'interface utilisateur (11, 21) un convertisseur électro-acoustique (11b, 21b), via lequel les données d'autorisation et les données de référence sont reproductibles et **en ce qu'**on utilise des attributs de reproduction qui comprennent des attributs audio, tels que des indications relatives à l'intensité sonore, la hauteur du son ou la longueur du son.

14. Système pour le contrôle d'autorisation, comprenant :
une centrale d'autorisation (3) informatisée destinée à transmettre des données d'autorisation via un réseau de télécommunication (8) vers un premier dispositif de reproduction (1),
une centrale pilote de reproduction (3') destinée à transmettre des données pilotes de reproduction via le réseau de télécommunication (8) vers le premier dispositif de reproduction (1) et destinée à transmettre des données de référence via le réseau de télécommunication (8) vers un deuxième dispositif de reproduction (2),
**caractérisé par**
des moyens pour la reproduction de données d'autorisation via une interface utilisateur (11) du premier dispositif de reproduction (1) et pour la modification d'attributs de reproduction sur la base des données pilotes de reproduction pendant la reproduction des données d'autorisation, en synchronisation dans le temps avec la reproduction des données de référence via une interface utilisateur (21) du deuxième dispositif de reproduction (2), respectivement avec des modifications d'attributs de reproduction pendant la reproduction des données de référence de telle sorte que la reproduction des données d'autorisation subit des modifications dynamiques.

15. Système selon la revendication 14, **caractérisé en ce que** la centrale d'autorisation (3) est conçue pour transmettre les données d'autorisation, conjointement avec une identification de la vérification, vers le premier dispositif de reproduction (1), et **en ce que** la centrale pilote de reproduction (3') est conçue pour transmettre les données pilotes de reproduction, conjointement avec une identification de la vérification, vers le premier dispositif de reproduction (1), pour les associer aux données d'autorisation.

16. Système selon la revendication 15, **caractérisé en ce que** la centrale d'autorisation (3) est conçue pour transmettre l'identification de la vérification et des informations sur un degré de sécurité souhaité vers la centrale pilote de reproduction (3'), et **en ce que** la centrale pilote de reproduction (3') est conçue pour déterminer les données pilotes de reproduction sur la base du degré de sécurité reçu.

17. Système selon la revendication 16, **caractérisé en ce que** la centrale pilote de reproduction (3') est conçue pour déterminer, sur la base du degré de sécurité reçu, un ou plusieurs objets de données et des informations sur la modification d'attributs de reproduction, pour transmettre les données pilotes de reproduction avec les objets de données et les informations sur la modification d'attributs de reproduction vers le premier dispositif de reproduction (1), et pour transmettre les objets de données et les informations sur la modification d'attributs de reproduction, conjointement avec les données de référence, vers le deuxième dispositif de reproduction (2).

18. Système selon la revendication 16 ou 17, **caractérisé en ce que** la centrale pilote de reproduction (3') est conçue pour déterminer, sur la base de l'identification de la vérification, des informations d'adresse pour l'adressage du premier et du deuxième dispositif de reproduction (1, 2).

19. Système selon la revendication 14, **caractérisé en ce que** le premier dispositif de reproduction (1) est conçu pour reproduire les données d'autorisation sur la base d'un premier signal de synchronisation via l'interface utilisateur (11) du premier dispositif de reproduction (1), **en ce que** le deuxième dispositif de reproduction (2) est conçu pour reproduire les données de référence sur la base d'un deuxième signal de synchronisation via l'interface utilisateur (21) du deuxième dispositif de reproduction (2), **en ce que** le premier dispositif de reproduction (1) est conçu pour générer le premier signal de synchronisation et **en ce que** le deuxième dispositif de reproduction (2) est conçu pour générer le deuxième signal de synchronisation.

20. Système selon la revendication 14, **caractérisé en ce que** le premier dispositif de reproduction (1) est conçu pour reproduire les données d'autorisation sur la base d'un premier signal de synchronisation via l'interface utilisateur (11) du premier dispositif de reproduction (1), **en ce que** le deuxième dispositif de reproduction (2) est conçu pour reproduire les données de référence sur la base d'un deuxième signal de synchronisation via l'interface utilisateur (21) du deuxième dispositif de reproduction (2), et **en ce que** le premier dispositif de reproduction (1) est conçu pour recevoir un signal délivré par le deuxième dispositif de reproduction (2) et pour générer le premier signal de synchronisation sur la base du signal reçu, ou **en ce que** le deuxième dispositif de reproduction (2) est conçu pour recevoir un signal délivré par le premier dispositif de reproduction (1) et pour générer le deuxième signal de synchronisation sur la base du signal reçu.

21. Système selon la revendication 14, **caractérisé en ce que** le premier dispositif de reproduction (1) est conçu pour reproduire les données d'autorisation sur la base d'un premier signal de synchronisation via l'interface utilisateur (11) du premier dispositif de reproduction (1), **en ce que** le deuxième dispositif de reproduction (2) est conçu pour reproduire les données de référence sur la base d'un deuxième signal de synchronisation via l'interface utilisateur (21) du deuxième dispositif de reproduction (2), **en ce que** le premier dispositif de reproduction (1) et le deuxième dispositif de reproduction (2) sont conçus pour recevoir un signal délivré par une centrale d'autorisation (3) informatisée et **en ce que** le premier dispositif de reproduction (1) et le deuxième dispositif de reproduction (2) sont conçus pour générer le premier signal de synchronisation et respectivement le deuxième signal de synchronisation sur la base du signal reçu.

22. Système selon la revendication 14, **caractérisé par** une centrale de synchronisation (3") destinée à générer un signal de synchronisation pour synchroniser la reproduction des données d'autorisation via l'interface utilisateur (11) du premier dispositif de reproduction (1) et la reproduction des données de référence via l'interface utilisateur (21) du deuxième dispositif de reproduction (2).

23. Système selon l'une quelconque des revendications 14 à 22, **caractérisé en ce que** les interfaces utilisateur (11, 21) comprennent chacune un affichage (11a, 12a) pour la représentation des données d'autorisation et respectivement des données de référence, et **en ce que** les attributs de reproduction comprennent des attributs visuels, tels que des indications de couleurs, des indications d'orientation, des indications pour déterminer un extrait d'image ou des indications de position ou des indications relatives à des types d'écriture.

24. Système selon l'une quelconque des revendications 14 à 23, **caractérisé en ce que** les interfaces utilisateur comprennent chacune un convertisseur électro-acoustique (11b, 21b) pour la reproduction des données d'autorisation et respectivement des données de référence, et **en ce que** les attributs de reproduction comprennent des attributs audio, tels que des indications relatives à l'intensité sonore, la hauteur du son ou la longueur du son.

25. Système selon l'une quelconque des revendications 14 à 24, **caractérisé en ce que** le premier dispositif de reproduction (1) est réalisé sous la forme d'un terminal mobile de communication.

26. Système selon l'une quelconque des revendications 14 à 24, **caractérisé en ce que** le premier dispositif de reproduction (1) est réalisé sous la forme d'une carte à puce.

27. Produit de programme informatique, comprenant un premier milieu lisible par ordinateur, avec des moyens de codage du programme informatique, pour commander un ou plusieurs processeurs d'un premier dispositif de reproduction (1) électronique, qui peut être utilisé dans un procédé de contrôle d'autorisation, de telle sorte que
le premier dispositif de reproduction (1) reçoit via un réseau de télécommunication (8) des données d'autorisation fournies par une centrale d'autorisation (3) informatisée, en ce que le premier dispositif de reproduction (1) reçoit via le réseau de télécommunication (8) des données pilotes de reproduction fournies par une centrale pilote de reproduction (3') informatisée, en ce que le premier dispositif de reproduction (1) reproduit des données d'autorisation via une interface utilisateur (11) du premier dispositif de reproduction (1) et pendant la reproduction des données d'autorisation modifie des attributs de reproduction sur la base des données pilotes de reproduction, de telle sorte que la modification des données d'autorisation subit une modification dynamique, la reproduction des données d'autorisation et les modifications des attributs de reproduction pendant la reproduction des données d'autorisation étant synchronisées dans le temps avec une reproduction de données de référence via une interface utilisateur (21) d'un deuxième dispositif de reproduction (2) électronique, respectivement avec des modifications d'attributs de reproduction pendant la reproduction des données de référence.

28. Produit de programme informatique selon la revendication 27, **caractérisé en ce qu'**il comprend d'autres moyens de codage du programme informatique qui commandent les processeurs du premier dispositif de reproduction (1) de telle sorte que le premier dispositif de reproduction (1) reçoit des données d'autorisation conjointement avec une identification de la vérification, **en ce que** le premier dispositif de reproduction (1) reçoit les données pilotes de reproduction avec l'identification de la vérification, et **en ce que** le premier dispositif de reproduction (1) associe les données d'autorisation et les données pilotes de reproduction entre elles sur la base de l'identification de la vérification.

29. Produit de programme informatique selon la revendication 27, **caractérisé en ce qu'**il comprend d'autres moyens de codage du programme informatique qui commandent les processeurs du premier dispositif de reproduction (1) de telle sorte que le premier dispositif de reproduction (1) reproduit les données d'autorisation sur la base d'un signal de synchronisation via l'interface utilisateur (11) du premier dispositif de reproduction (1), et **en ce que** le premier dispositif de reproduction (1) génère le signal de synchronisation.

30. Produit de programme informatique selon la revendication 27, **caractérisé en ce qu'**il comprend d'autres moyens de codage du programme informatique qui commandent les processeurs du premier dispositif de reproduction (1) de telle sorte que le premier dispositif de reproduction (1) reproduit les données d'autorisation sur la base d'un signal de synchronisation via l'interface utilisateur (11) du premier dispositif de reproduction (1), et **en ce que** le premier dispositif de reproduction (1) génère le signal de synchronisation sur la base d'un signal que le premier dispositif de reproduction (1) reçoit à partir du deuxième dispositif de reproduction (2), ou **en ce que** le premier dispositif de reproduction (1) transmet un signal vers le deuxième dispositif de reproduction (2) pour générer un signal de synchronisation dans le deuxième dispositif de reproduction (2).

31. Produit de programme informatique selon la revendication 27, **caractérisé en ce qu'**il comprend d'autres moyens de codage du programme informatique qui commandent les processeurs du premier dispositif de reproduction (1) de telle sorte que le premier dispositif de reproduction (1) reproduit les données d'autorisation sur la base d'un signal de synchronisation via l'interface utilisateur (11) du premier dispositif de reproduction (1), **en ce que** le premier dispositif de reproduction (1) reçoit via un réseau de télécommunication (8) un signal délivré par une centrale (3, 3'') informatisée, et **en ce que** le premier dispositif de reproduction (1) génère le premier signal de synchronisation sur la base du signal reçu.
